(19)

**Europäisches Patentamt**
**European Patent Office**
**Office européen des brevets**

(11)　**EP 4 430 896 B1**

(12)　# EUROPEAN PATENT SPECIFICATION

(45) Date of publication and mention
of the grant of the patent:
**13.05.2026 Bulletin 2026/20**

(21) Application number: **23706446.4**

(22) Date of filing: **08.02.2023**

(51) International Patent Classification (IPC):
***H04W 64/00*** (2009.01)　　***H04L 5/00*** (2006.01)

(52) Cooperative Patent Classification (CPC):
**H04L 5/0048; H04W 64/006**

(86) International application number:
**PCT/IB2023/051137**

(87) International publication number:
**WO 2023/152662 (17.08.2023 Gazette 2023/33)**

(54) **ON-DEMAND PRS CONFIGURATION PARAMETERS**

BEDARFSABHÄNGIGE PRS-KONFIGURATIONSPARAMETER

PARAMÈTRES DE CONFIGURATION DE PRS À LA DEMANDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.02.2022 US 202263307984 P**

(43) Date of publication of application:
**18.09.2024 Bulletin 2024/38**

(73) Proprietor: **Lenovo (Singapore) Pte. Ltd.
Singapore 556741 (SG)**

(72) Inventors:
• **THOMAS, Robin
61231 Bad Nauheim (DE)**
• **CHOI, Hyung-Nam
85521 Ottobrunn (DE)**

(74) Representative: **Openshaw & Co.
8 Castle Street
Farnham, Surrey GU9 7HR (GB)**

(56) References cited:
• **INTERDIGITAL INC: "Discussion on On-demand
PRS", vol. RAN WG2, no. Electronic; 20220117 -
20220125, 11 January 2022 (2022-01-11),
XP052094289, Retrieved from the Internet
<URL:https://ftp.3gpp.org/tsg_ran/WG2_RL2/
TSGR2_116bis-e/Docs/R2-2201187.zip
R2-2201187 (R17 NR POS
WI_AI8114_OnDemandPRS).doc> [retrieved on
20220111]**
• **ERICSSON: "Remaining issues regarding on-
demand SI for Positioning", vol. RAN WG2, no.
Chongqing, China; 20191014 - 20191018, 3
October 2019 (2019-10-03), XP051791324,
Retrieved from the Internet <URL:http://
www.3gpp.org/ftp/tsg_ran/WG2_RL2/
TSGR2_107bis/Docs/R2-1913318.zip> [retrieved
on 20191003]**
• **QUALCOMM INCORPORATED: "On-Demand DL-
PRS", vol. RAN WG2, no. Electronic; 20210519 -
20210527, 11 May 2021 (2021-05-11),
XP052007454, Retrieved from the Internet
<URL:https://ftp.3gpp.org/tsg_ran/WG2_RL2/
TSGR2_114-e/Docs/R2-2106084.zip
R2-2106084_(On-demand PRS).docx> [retrieved
on 20210511]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

• **QUALCOMM INCORPORATED: "Remaining issues for on-demand DL-PRS", vol. RAN WG2, no. Electronic; 20220117 - 20220125, 11 January 2022 (2022-01-11), XP052094078, Retrieved from the Internet <URL:https://ftp.3gpp.org/tsg_ran/ WG2_RL2/TSGR2_116bis-e/Docs/R2-2200964.zip R2-2200964_(On-demand PRS).docx> [retrieved on 20220111]**

**Description**

CROSS-REFERENCE TO RELATED APPLICATIONS

This application claims priority to United States Provisional Patent Application Number 63/307,984 entitled "SYSTEMS, APPARATUSES AND METHODS, FOR DYNAMIC ON-DEMAND PRS CONFIGURATION ENHANCEMENTS" and filed on 8 February 2022 for Robin Thomas and Hyung-Nam Choi.

FIELD

The subject matter disclosed herein relates generally to wireless communications and more particularly relates to location server architectural enhancements for non-terrestrial networks.

BACKGROUND

In certain wireless communication systems using Third Generation Partnership Project ("3GPP") New Radio ("NR") Radio Access Technology ("RAT"), device positioning is based on signals over the Uu interface (i.e., the air/radio interface between Radio Access Network ("RAN") and communication device, such as a User Equipment ("UE"). In particular, a RAN entity may transmit a set of Positioning Reference Signals ("PRS") to facilitate positioning-related measurements at the communication device. Interdigital Inc: "Discussion on On-demand PRS", 3GPP draft; R2-2201187 (2022-01-11) discloses observations and proposals relating to updating certain parameters of PRS configuration.

BRIEF SUMMARY

Disclosed are solutions for dynamic, on-demand PRS configurations. Said solutions may be implemented by apparatus, systems, methods, and/or computer program products. There are provided a user equipment according to claim 1, a method at a user equipment according to claim 11, a location server according to claim 12, and a method at a location server according to claim 15.

One method at a UE includes transmitting, to a location server, an indication of a need for an on-demand PRS and receiving, from the location server, a pre-defined set of on-demand PRS configurations. The first method includes determining whether the pre-defined set of on-demand PRS configurations meets a set of positioning requirements of the UE and transmitting, to the location server, a first additional on-demand PRS request based on the pre-defined set of on-demand PRS configurations failing to meet one or more positioning requirements of the UE. The first method includes receiving, from the location server, a set of on-demand PRS configuration parameters that meet the one or more positioning requirements.

One method at a network entity includes receiving, from a UE, an indication of a need for on-demand PRS and transmitting, to the UE, a pre-defined list of on-demand PRS configurations. The second method includes receiving, from the UE, a first additional on-demand PRS request corresponding to one or more positioning requirements of the UE and transmitting, to the UE, a set of on-demand PRS configuration parameters that meet the one or more positioning requirements.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a schematic block diagram illustrating one embodiment of a wireless communication system for dynamic delivery of an on-demand PRS configuration;
Figure 2 is a block diagram illustrating one embodiment of a New Radio ("NR") protocol stack;
Figure 3 is a diagram illustrating one embodiment of NR downlink ("DL") based positioning;
Figure 4 is a diagram illustrating one embodiment of an Abstract Syntax Notation 1 ("ASN.1") implementation of a *RequestLocationInformation* message;
Figure 5 is a diagram illustrating one embodiment of an ASN.1 implementation of a *ProvideLocationInformation* message;
Figure 6 is a diagram illustrating one embodiment of a network-aware UE-initiated on-demand PRS request;
Figure 7 is a diagram illustrating one embodiment of a network-blind UE-initiated on-demand PRS request;

Figure 8 is a diagram illustrating one embodiment of a network indication of supported pre-defined on-demand PRS configurations;

Figure 9 is a diagram illustrating one embodiment of a UE indication of supported pre-defined on-demand PRS configurations;

Figure 10 is a block diagram illustrating one embodiment of a user equipment apparatus that may be used for dynamic delivery of an on-demand PRS configuration;

Figure 11 is a block diagram illustrating one embodiment of a network apparatus that may be used for dynamic delivery of an on-demand PRS configuration;

Figure 12 is a flowchart diagram illustrating one embodiment of a first method for dynamic delivery of an on-demand PRS configuration; and

Figure 13 is a flowchart diagram illustrating one embodiment of a second method for dynamic delivery of an on-demand PRS configuration.

## DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "at least one of A, B and C" includes only A, only B, only C, a combination of A and B, a combination of B and C, a combination of A and C or a combination of A, B and C. As used herein, "a member selected from the group consisting of A, B, and C," includes one and only one of A, B, or C, and excludes combinations of A, B, and C. As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for dynamic delivery of an on-demand PRS configuration. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

For 3GPP Release 17 ("Rel-17") positioning, a number of enhancements have been proposed to address the positioning requirements for commercial and IIoT devices/UEs. One such enhancement is on-demand PRS, whereby the UE or Location Management Function ("LMF") may dynamically request and receive updated DL PRS configuration parameters via UE-initiated or LMF-initiated on-demand PRS respectively. A key motivation for on-demand PRS is that the network may dynamically provision an updated on-demand PRS configuration on a need basis depending on various requirements, e.g., change in positioning requirements. Currently, it is assumed that the location server (e.g., LMF) sends blindly a number of pre-defined PRS configurations to the UE.

However, the following issues have been identified:

In the case of UE-initiated (i.e., Mobile-Originated Location Requests ("MO-LR")) on-demand PRS requests, 3GPP Rel-17 does not define how the LMF may understand the UE's positioning requirements, without receiving any prior signaling on which PRS configuration parameters to modify.

If the initial pre-defined set (e.g., list) of PRS configurations provided by the network are not sufficient to the positioning requirements of the internal Location Services ("LCS") client of the UE, 3GPP Rel-17 does not define how the UE may respond to the network, i.e., if the UE should request the specific PRS parameters to be modified or indicate that the provided DL PRS configurations are insufficient to the UE's internal positioning requirements.

There may be a misalignment between the maximum pre-defined on-demand PRS configurations supported by the UE versus the actual maximum pre-defined on-demand PRS configurations supported by the network, e.g., depending on the UE's capabilities (e.g., Reduced Capability ("RedCap") UE or Advanced UE). In this case, there is no mechanism to enable the network to share the maximum supported on-demand PRS configurations with the UE, which may vary depending on deployments.

Current proposals for on-demand PRS propose to blindly transmit the pre-defined on-demand PRS configurations to the UE, without consideration of the UE's internal positioning requirements. Furthermore, the UE is conditioned to only initiate on-demand PRS on prior reception of the pre-defined sets of on-demand PRS configurations, which limits the functionality of UE-initiated on-demand PRS to inform the network about the desired on-demand PRS configuration parameters. Furthermore, there are no specified methods to enable the UE to transmit a subsequent on-demand PRS request in the event that the received list or pre-defined on-demand PRS configurations do not meet the UE's internal positioning requirements.

The present disclosure describes systems, methods, and apparatuses to address the above issues with regards to the above on-demand PRS signaling enhancements, especially with respect to UE-initiated on-demand PRS.

The solutions described herein enable the network to provide the desired on-demand PRS configurations to UEs performing UE-based RAT-dependent positioning. The network aware UE-initiated on-demand PRS mechanism will avoid the location server from sending pre-defined on-demand PRS configurations which do not meet the UE's internal positioning requirements. Furthermore, in the event that the network transmits a blind set of pre-defined on-demand PRS configurations, the network may configure at least one type of timer to allow the UE to transmit a subsequent on-demand PRS request containing its desired on-demand PRS parameters.

A first solution describes techniques to explicitly indicate the need and set of desired on-demand PRS parameters to enable network aware UE-initiated on-demand PRS. According to the first solution, a target-UE may transmit an explicit indication to the location server (e.g., LMF) indicating its need for performing UE-initiated on-demand PRS coupled with a specific set of desired on-demand PRS parameters.

A second solution describes techniques to explicitly configure a timer on which the UE may transmit a second on-demand PRS request in the event that the first on-demand PRS request and corresponding received list of pre-defined on-demand PRS configurations does not satisfy the UE's positioning requirements. According to the second solution, the network may provide a blind pre-defined on-demand PRS configuration.

A third solution describes techniques to enable the UE or location server to signal the maximum number of pre-defined configurations that may be supported. This is based either on the UE's capability or the type of network deployment. According to the third solution, the location server may indicate to the UE, the maximum supported pre-defined PRS configurations, which may vary depending on the network deployment.

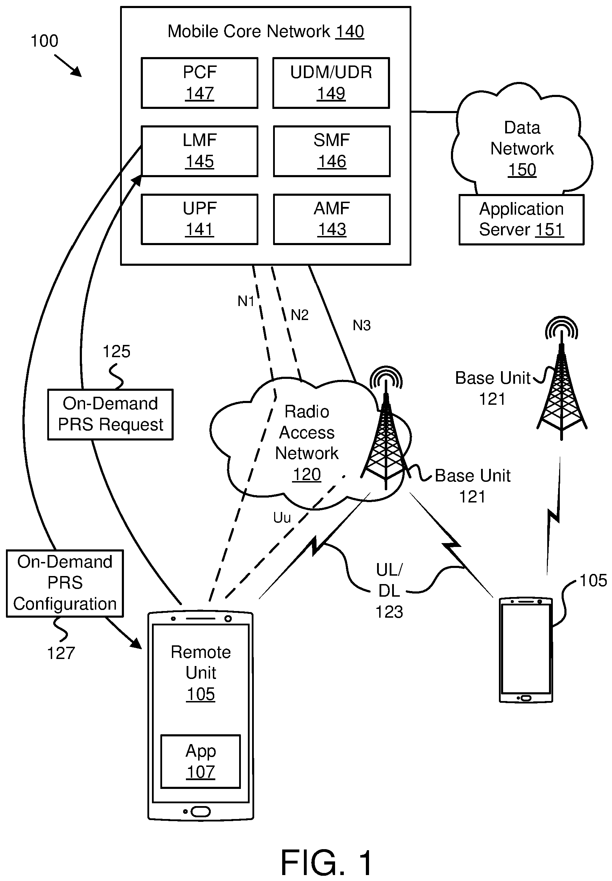

Figure 1 depicts a wireless communication system 100 for dynamic delivery of an on-demand PRS configuration, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the Fifth Generation ("5G") system specified in the 3GPP specifications. For example, the RAN 120 may be a Next Generation Radio Access Network ("NG-RAN"), implementing NR Radio Access Technology ("RAT") and/or Long-Term Evolution ("LTE") RAT. In another example, the RAN 120 may include non-3GPP RAT (e.g., Wi-Fi® or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example, the Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art.

In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above). The remote unit 105 allows a user to access network services. In various embodiments, the interface between the remote unit 105 and the network is the radio interface. The remote unit 105 may be subdivided into a number of domains, the domains being separated by reference points. For example, the remote unit 105 may be subdivided into the Universal Integrated Circuit Card ("UICC") domain and the ME Domain. The ME Domain can further be subdivided into one or more Mobile Termination ("MT") and TE components, with connectivity between multiple functional groups.

The remote units 105 may communicate directly with one or more of the base units 121 in the RAN 120 via uplink ("UL") and downlink ("DL") communication signals. Furthermore, the UL and DL communication signals may be carried over the wireless communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more DL channels, such as the Physical Downlink Control Channel ("PDCCH") and/or Physical Downlink Shared Channel ("PDSCH"). Here, the RAN 120 is an intermediate network that provides the remote units 105 with access to the mobile core network 140.

In various embodiments, the remote units 105 may communicate directly with each other (e.g., device-to-device communication) using sidelink communication links (not depicted in Figure 1). Here, sidelink transmissions may occur on sidelink resources. A remote unit 105 may be provided with different sidelink communication resources according to different allocation modes. As used herein, a "resource pool" refers to a set of resources assigned for sidelink operation. A resource pool consists of a set of resource blocks (i.e., Physical Resource Blocks ("PRB")) over one or more time units (e.g., Orthogonal Frequency Division Multiplexing ("OFDM") symbols, subframes, slots, subslots, etc.). In some embodiments, the set of resource blocks comprises contiguous PRBs in the frequency domain. A PRB, as used herein, consists of twelve consecutive subcarriers in the frequency domain.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or Packet Data Network ("PDN") connection) with the mobile core network 140 via the RAN 120. The PDU session represents a logical connection between the remote unit 105 and the User Plane Function ("UPF") 141. The mobile core network 140 then relays traffic between the remote unit 105 and the application server 151 in the packet data network 150 using the PDU session (or other data connection).

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a PDN connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW") (not shown in Figure 1) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a gNB, a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121.

Note that during NR operation on unlicensed spectrum (referred to as "NR-U"), the base unit 121 and the remote unit 105 communicate over unlicensed (i.e., shared) radio spectrum. Similarly, during LTE operation on unlicensed spectrum (referred to as "LTE-U"), the base unit 121 and the remote unit 105 also communicate over unlicensed (i.e., shared) radio spectrum. For operation in unlicensed spectrum (e.g., NR-U or LTE-U), when a remote unit 105 or base unit 121 wants to transmit, it has to detect the energy level at a designated time for duration equal to a Clear Channel Assessment ("CCA") period. If the energy level in the channel is below the CCA threshold, then the equipment can transmit for duration equal to a (i.e., predefined) Channel Occupancy Time ("COT"). After that, if the equipment wishes to continue its transmission, it has to repeat the CCA process.

In one embodiment, the mobile core network 140 is a 5G core network ("5GC") or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Location Management Function ("LMF") 145, a Session Management Function ("SMF") 146, a Policy Control Function ("PCF") 147, a Unified Data Management function ("UDM") and a User Data Repository ("UDR") (also referred to as "Unified Data Repository"). Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Stratum ("NAS") signaling, NAS ciphering and integrity protection, registration management, connection management, mobility management, access authentication and authorization, security context management. The LMF 145 receives measurements and assistance information from the RAN 120 and the remote unit 105 via the AMF 143 over the 'NLs' interface to determine the location/position of the remote unit 105. In some embodiments, the LMF 145 configures the remote unit 106 via the AMF 143.

The SMF 146 is responsible for session management (i.e., session establishment, modification, release), remote unit (i.e., UE) Internet Protocol ("IP") address allocation and management, DL data notification, and traffic steering configuration of the UPF 141 for proper traffic routing. The RAN 120 configures the remote unit 105 using radio resource control ("RRC") protocol over the Uu interface (e.g., LTE-Uu and/or NR-Uu). The PCF 147 is responsible for unified policy framework, providing policy rules to CP functions, access subscription information for policy decisions in UDR.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 146 and UPF 141. In some embodiments, the different network slices may share some common network functions, such as the AMF 143. The different network slices are not shown in Figure 1 for ease of illustration, but their support is assumed. Where different network slices are deployed, the mobile core network 140 may include a Network Slice Selection Function ("NSSF") which is responsible for selecting of the Network Slice instances to serve the remote unit 105, determining the allowed NSSAI, determining the AMF set to be used to serve the remote unit 105.

The solutions described herein enable the mobile core network 140 to provide the desired on-demand PRS configurations to remote units 105 performing UE-based RAT-dependent positioning. In certain embodiments, the remote unit 105 may be configured to request the base unit 121 for on-demand PRSs, and the base unit 121 may be configured to transmit a set of one or more PRS to the remote unit 105. A PRS is defined by at least a bandwidth (e.g., a number of consecutive subcarriers), a duration (e.g., a number of consecutive slots or subframes), a Resource Element ("RE") offset, a number of symbols, a comb pattern size, and a periodicity. In various embodiments, a remote unit 105 may be configured to transmit an on-demand PRS request 125 to the LMF 145, and the LMF 145 may be configured to respond by providing one or more on-demand PRS configurations to the remote unit 105. The network-aware, UE-initiated on-demand PRS mechanism prevents the LMF 146 from sending pre-defined on-demand PRS configurations which do not meet the internal positioning requirements of the remote unit 105, as described in further detail below.

While Figure 1 depicts components of a 5G RAN and a 5G core network, the described embodiments for dynamic delivery of an on-demand PRS configuration apply to other types of communication networks and RATs, including IEEE 802.11 variants, Global System for Mobile Communications ("GSM") (i.e., a 2G digital cellular network), General Packet Radio Service ("GPRS"), Universal Mobile Telecommunications System ("UMTS"), LTE variants, CDMA2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 146 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station/ base unit, but it is replaceable by any other radio access node, e.g., gNB, ng-eNB, eNB, Base Station ("BS"), base station unit, Access Point ("AP"), NR BS, 5G NB, Transmission and Reception Point ("TRP"), etc. Additionally, the term "UE" is used for the mobile station/ remote unit, but it is replaceable by any other remote device, e.g., remote unit, MS, ME, etc.

Further, the operations are described mainly in the context of 5G NR. However, the below described solutions/-methods are also equally applicable to other mobile communication systems dynamic delivery of an on-demand PRS configuration.

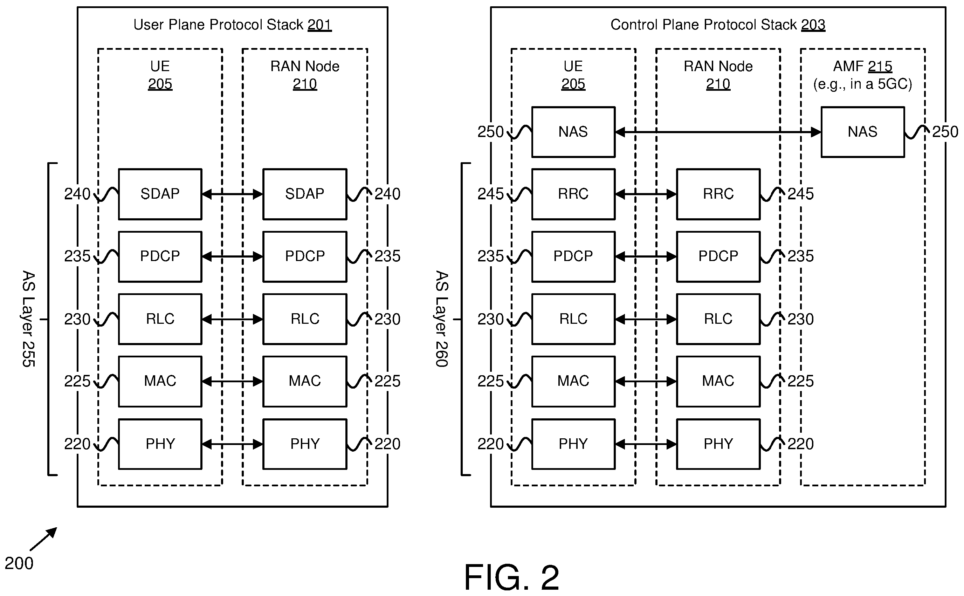

Figure 2 depicts an NR protocol stack 200, according to embodiments of the disclosure. While Figure 2 shows the UE 205, the RAN node 210 and an AMF 215 in a 5G core network ("5GC"), these are representatives of a set of remote units 105 interacting with a base unit 121 and a mobile core network 140. As depicted, the NR protocol stack 200 comprises a User Plane protocol stack 201 and a Control Plane protocol stack 203. The User Plane protocol stack 201 includes a physical ("PHY") layer 220, a Medium Access Control ("MAC") sublayer 225, the Radio Link Control ("RLC") sublayer 230, a Packet Data Convergence Protocol ("PDCP") sublayer 235, and Service Data Adaptation Protocol ("SDAP") sublayer 240. The Control Plane protocol stack 203 includes a PHY layer 220, a MAC sublayer 225, an RLC sublayer 230, and a PDCP sublayer 235. The Control Plane protocol stack 203 also includes an RRC layer 245 and a NAS layer 250.

The Access Stratum ("AS") layer 255 (also referred to as "AS protocol stack") for the User Plane protocol stack 201 consists of at least SDAP, PDCP, RLC and MAC sublayers, and the physical layer. The AS layer 260 for the Control Plane protocol stack 203 consists of at least RRC, PDCP, RLC and MAC sublayers, and the physical layer. The Layer-1 ("L1") consists of the PHY layer 220. The Layer-2 ("L2") is split into the SDAP sublayer 240, PDCP sublayer 235, RLC sublayer 230, and MAC sublayer 225. The Layer-3 ("L3") includes the RRC layer 245 and the NAS layer 250 for the control plane and includes, e.g., an IP layer and/or PDU Layer (not shown in Figure 1) for the user plane. L1 and L2 are referred to as "lower layers," while L3 and above (e.g., transport layer, application layer) are referred to as "higher layers" or "upper layers."

The PHY layer 220 offers transport channels to the MAC sublayer 225. The PHY layer 220 may perform a Clear Channel Assessment and/or Listen-Before-Talk ("CCA/LBT") procedure using energy detection thresholds. In certain embodiments, the PHY layer 220 may send an indication of beam failure to a MAC entity at the MAC sublayer 225. In certain embodiments, the PHY layer 220 may send a notification of Listen-Before-Talk ("LBT") failure to a MAC entity at the MAC sublayer 235. The MAC sublayer 225 offers logical channels to the RLC sublayer 230. The RLC sublayer 230 offers RLC channels to the PDCP sublayer 235. The PDCP sublayer 235 offers radio bearers to the SDAP sublayer 240 and/or RRC layer 245. The SDAP sublayer 240 offers QoS flows to the core network (e.g., 5GC). The RRC layer 245 provides functions for the addition, modification, and release of Carrier Aggregation and/or Dual Connectivity. The RRC layer 245 also manages the establishment, configuration, maintenance, and release of Signaling Radio Bearers ("SRBs") and Data Radio Bearers ("DRBs").

The NAS layer 250 is between the UE 205 and an AMF 215 in the 5GC. NAS messages are passed transparently through the RAN. The NAS layer 250 is used to manage the establishment of communication sessions and for maintaining continuous communications with the UE 205 as it moves between different cells of the RAN. In contrast, the AS layers 255 and 260 are between the UE 205 and the RAN (i.e., RAN node 210) and carry information over the wireless portion of the network. While not depicted in Figure 2, the IP layer exists above the NAS layer 250, a transport layer exists above the IP layer, and an application layer exists above the transport layer.

The MAC sublayer 225 is the lowest sublayer in the L2 architecture of the NR protocol stack. Its connection to the PHY layer 220 below is through transport channels, and the connection to the RLC sublayer 230 above is through logical channels. The MAC sublayer 225 therefore performs multiplexing and demultiplexing between logical channels and transport channels: the MAC sublayer 225 in the transmitting side constructs MAC PDUs (also known as transport blocks ("TBs")) from MAC Service Data Units ("SDUs") received through logical channels, and the MAC sublayer 225 in the receiving side recovers MAC SDUs from MAC PDUs received through transport channels.

The MAC sublayer 225 provides a data transfer service for the RLC sublayer 230 through logical channels, which are either control logical channels which carry control data (e.g., RRC signaling) or traffic logical channels which carry user plane data. On the other hand, the data from the MAC sublayer 225 is exchanged with the PHY layer 220 through transport channels, which are classified as UL or DL. Data is multiplexed into transport channels depending on how it is transmitted over the air.

The PHY layer 220 is responsible for the actual transmission of data and control information via the air interface, i.e., the PHY layer 220 carries all information from the MAC transport channels over the air interface on the transmission side. Some of the important functions performed by the PHY layer 220 include coding and modulation, link adaptation (e.g., Adaptive Modulation and Coding ("AMC")), power control, cell search and random access (for initial synchronization and handover purposes) and other measurements (inside the 3GPP system (i.e., NR and/or LTE system) and between systems) for the RRC layer 245. The PHY layer 220 performs transmissions based on transmission parameters, such as the modulation scheme, the coding rate (i.e., the modulation and coding scheme ("MCS")), the number of PRBs, etc.

Regarding Rel-16 and Rel-17 Positioning Requirements, NR positioning based on NR Uu signals and 5G architecture (e.g., beam-based transmissions) was first specified in Rel-16. The target use cases also included commercial and regulatory (emergency services) scenarios as in 3GPP Release 15 ("Rel-15"). One example of performance requirements is found in Table 1, below:

**Table 1**

| Positioning Error | Indoor | Outdoor |
|---|---|---|
| Horizontal Positioning | < 3m for 80% of UEs | < 10m for 80% of UEs |
| Vertical Positioning | < 3m for 80% of UEs | < 3m for 80% of UEs |

Current 3GPP Rel-17 Positioning has recently defined the positioning performance requirements for Commercial and Industrial Internet of Things ("IIoT") use cases as follows in Table 2.

**Table 2**

| Positioning Error | Commercial | IIoT |
|---|---|---|
| Horizontal Positioning | (< 1 m) for 90% of UEs | (< 0.2 m) for 90% of UEs; |
| Vertical Positioning | (< 3 m) for 90% of UEs | (< 1 m) for 90% of UEs |
| Physical layer latency for position estimation of UE | (< 10 ms) | (< 10 ms) |
| End-to-End Latency for position estimation of UE | (<100 ms) | (< 100 ms, in the order of 10 ms is desired) |

The supported positioning techniques in Rel-16 are listed in Table 3, below. These techniques are defined in 3GPP Technical Specification ("TS") 38.305.

**Table 3: Supported Rel-16 UE positioning methods**

| Method | UE-based | UE-assisted, LMF-based | NG-RAN node assisted | Secure User-Plane Location ("SUPL") |
|---|---|---|---|---|
| Assisted GNSS | Yes | Yes | No | Yes (UE-based and UE-assisted) |
| OTDOA [Note1, Note 2] | No | Yes | No | Yes (UE-assisted) |
| E-CID [Note 3] | No | Yes | Yes | Yes, for E-UTRA (UE-assisted) |
| Sensor | Yes | Yes | No | No |
| WLAN | Yes | Yes | No | Yes |
| Bluetooth | No | Yes | No | No |
| TBS [Note 4] | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | -- | No |
| UL-TDOA | No | No | Yes | No |
| UL-AoA | No | No | Yes | No |
| NOTE 1: This includes Terrestrial Beacon System ("TBS") positioning based on PRS signals. NOTE 2: In this version of the specification only Observed Time Difference of Arrival ("OTDOA") based on LTE signals is supported. NOTE 3: This includes Cell-ID for NR method. NOTE 4: In this version of the specification only for TBS positioning based on Metropolitan Beacon System ("MBS") signals. | | | | |

Separate positioning techniques as indicated in Table 3 can be currently configured and performed based on the requirements of the LMF and UE capabilities. The transmission of PRS enables the UE 205 to perform UE positioning-related measurements to enable the computation of a UE's location estimate and are configured per TRP, where a TRP may transmit one or more beams.

The following RAT-dependent positioning techniques are supported in 3GPP Rel-16: Downlink Time Difference of Arrival ("DL-TDOA"); Downlink Angle-of-Departure ("DL-AoD"); Multi-RTT; Enhanced Cell Identity ("E-CID"); Uplink Time Difference of Arrival ("UL-TDOA"); Uplink Angle-of-Arrival ("UL-AoA").

The DL-TDOA positioning method makes use of the DL Reference Signal Time Difference ("RSTD") (and optionally DL PRS Reference Signal Received Power ("RSRP")) of downlink signals received from multiple Transmission Points ("TPs"), at the UE 205. The UE 205 measures the DL RSTD (and optionally DL PRS RSRP) of the received signals using assistance data received from the positioning server, and the resulting measurements are used along with other configuration information to locate the UE 205 in relation to the neighboring TPs.

The DL-AoD positioning method makes use of the measured DL PRS RSRP of downlink signals received from multiple TPs, at the UE 205. The UE 205 measures the DL PRS RSRP of the received signals using assistance data received from the positioning server, and the resulting measurements are used along with other configuration information to locate the UE 205 in relation to the neighboring TPs.

The Multi-RTT positioning method makes use of the UE Rx-Tx measurements and DL PRS RSRP of downlink signals received from multiple TRPs, measured by the UE 205 and the measured gNB Rx-Tx measurements and UL Sounding Reference Signal RSRP ("SRS-RSRP") at multiple TRPs of uplink signals transmitted from UE 205.

According to an exemplary Multi-Call RTT procedure, the UE 205 measures the UE Rx-Tx measurements (and optionally DL PRS RSRP of the received signals) using assistance data received from the positioning server, and the TRPs measure the gNB Rx-Tx measurements (and optionally UL SRS-RSRP of the received signals) using assistance data received from the positioning server. The measurements are used to determine the Round Trip Time ("RTT") at the positioning server which are used to estimate the location of the UE 205.

In the E-CID positioning method, the position of a UE 205 is estimated with the knowledge of its serving ng-eNB, gNB and cell and is based on Uu (e.g., LTE) signals. The information about the serving ng-eNB, gNB and cell may be obtained by paging, registration, or other methods. The NR E-CID positioning method refers to techniques which use additional UE measurements and/or NR radio resource and other measurements to improve the UE location estimate using NR signals.

Although the NR E-CID positioning method may utilize some of the same measurements as the measurement control system in the RRC protocol, the UE 205 generally is not expected to make additional measurements for the sole purpose of positioning; i.e., the positioning procedures do not supply a measurement configuration or measurement control message, and the UE 205 reports the measurements that it has available rather than being required to take additional measurement actions.

The UL-TDOA positioning method makes use of the time difference of arrival (and optionally UL SRS-RSRP) at multiple Reception Points of uplink signals transmitted from UE 205. The Reception Points measure the UL TDOA (and optionally UL SRS-RSRP) of the received UL signals using assistance data received from the positioning server, and the resulting measurements are used along with other configuration information to estimate the location of the UE 205.

The UL-AoA positioning method makes use of the measured azimuth and the zenith of arrival at multiple Reception Points of uplink signals transmitted from UE 205. The Reception Points measure Azimuth Angle-of-Arrival ("A-AoA") and/or Zenith Angle-of-Arrival ("Z-AoA") of the received signals using assistance data received from the positioning server, and the resulting measurements are used along with other configuration information to estimate the location of the UE 205.

RAT-dependent positioning techniques involve the 3GPP RAT and core network entities to perform the position estimation of the UE 205, which are differentiated from RAT-independent positioning techniques which rely on Global Navigation Satellite System ("GNSS"), Inertial Measurement Unit ("IMU") sensor, WLAN and Bluetooth technologies for performing target device (i.e., UE 205) positioning.

The following RAT-Independent positioning techniques are supported in Rel-16: Network-assisted GNSS, Barometric pressure sensor positioning, WLAN positioning, Bluetooth positioning, TBS positioning, Motion sensor positioning.

The network-assisted GNSS methods make use of UEs 205 that are equipped with radio receivers capable of receiving GNSS signals. In 3GPP specifications the term GNSS encompasses both global and regional/augmentation navigation satellite systems.

Examples of global navigation satellite systems include Global Positioning System ("GPS"), Modernized GPS, Galileo, GLObal'naya NAvigatsionnaya Sputnikovaya Sistema ("GLONASS"), and BeiDou Navigation Satellite System ("BDS"). Regional navigation satellite systems include Quasi Zenith Satellite System ("QZSS") while the many augmentation systems, are classified under the generic term of Space Based Augmentation Systems ("SBAS") and provide regional augmentation services. In this concept, different GNSSs (e.g., GPS, Galileo, etc.) can be used separately or in combination to determine the location of a UE 205.

Regarding barometric pressure sensor positioning, the barometric pressure sensor method makes use of barometric sensors to determine the vertical component of the position of the UE 205. The UE 205 measures barometric pressure, optionally aided by assistance data, to calculate the vertical component of its location or to send measurements to the positioning server for position calculation. This method should be combined with other positioning methods to determine the 3D position of the UE 205.

Regarding WLAN positioning, the WLAN positioning method makes use of the WLAN measurements (e.g., WLAN AP identifiers and, optionally, signal strength or other measurements) and databases to determine the location of the UE 205. The UE 205 measures received signals from WLAN APs, optionally aided by assistance data, to send measurements to the positioning server for position calculation. Using the measurement results and a references database, the location of the UE 205 is calculated. Alternatively, the UE 205 makes use of WLAN measurements and optionally WLAN AP assistance data provided by the positioning server, to determine its location.

Regarding Bluetooth positioning, the Bluetooth positioning method makes use of Bluetooth measurements (beacon identifiers and optionally other measurements) to determine the location of the UE 205. The UE 205 measures received signals from Bluetooth beacons. Using the measurement results and a references database, the location of the UE 205 is calculated. The Bluetooth methods may be combined with other positioning methods (e.g., WLAN) to improve positioning accuracy of the UE 205.

A TBS consists of a network of ground-based transmitters, broadcasting signals only for positioning purposes. Regarding TBS positioning, the current type of TBS positioning signals are the Metropolitan Beacon System ("MBS") signals and PRS. The UE 205 measures received TBS signals, optionally aided by assistance data, to calculate its location or to send measurements to the positioning server for position calculation.

Regarding IMU / motion sensor positioning, this method makes use of different sensors such as accelerometers, gyros, magnetometers, to calculate the displacement of the UE 205. The UE 205 estimates a relative displacement based upon a reference position and/or reference time. The UE 205 sends a report comprising the determined relative displacement which can be used to determine the absolute position. This method should be used with other positioning methods for hybrid positioning.

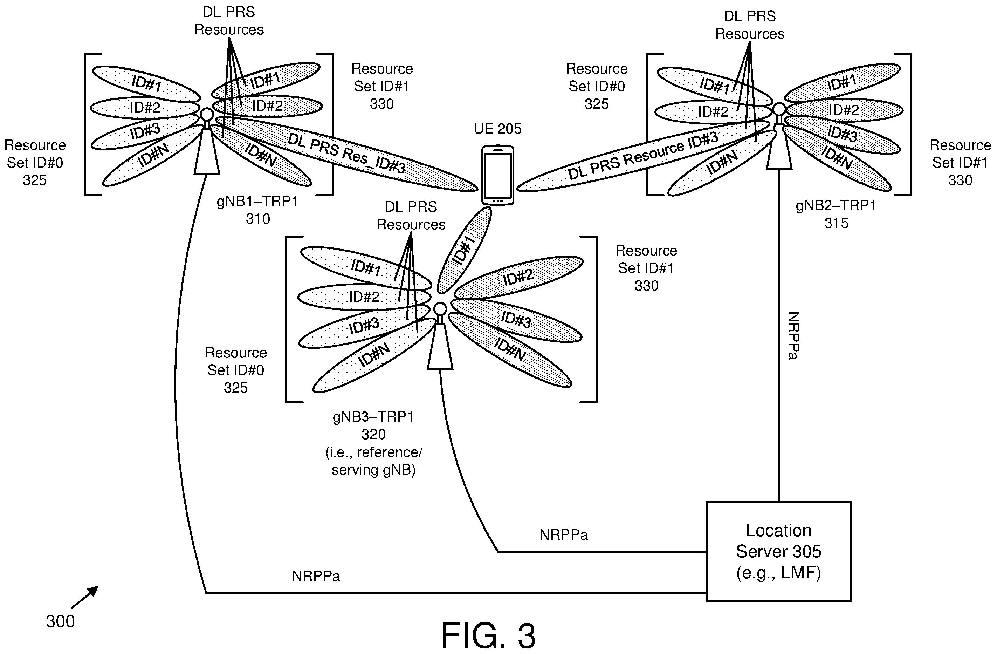

Figure 3 depicts a network architecture 300 for Downlink-based positioning measurements and reference signals ("RS"), according to embodiments of the disclosure. Here, the DL PRS can be transmitted by different base stations (e.g., serving gNB and neighboring gNB(s)) using narrow beams over Frequency Range #1 Between ("FR1") (i.e., frequencies from 410 MHz to 7125 MHz) and Frequency Range #2 ("FR2") (i.e., frequencies from 24.25 GHz to 52.6 GHz), which is relatively different when compared to LTE where the PRS was transmitted across the whole cell. As illustrated in Figure 3, a UE 205 may receive DL PRS from a neighboring first gNB/TRP (denoted "gNB1-TRP1") 310, from a neighboring second gNB (denoted "gNB2-TRP1") 315, and also from a third gNB/TRP (denoted "gNB3-TRP1") 320 which is a reference or serving gNB.

Here, the DL PRS can be locally associated with a DL PRS Resource Identifier ("ID") and Resource Set ID for a base station (i.e., TRP). In the depicted embodiments, each gNB 310, 315, 320 is configured with a first Resource Set ID (depicted as "Resource Set ID#0") 325 and a second Resource Set ID (depicted as "Resource Set ID#1") 330. As depicted, the UE 205 receives DL PRS on transmission beams; here, receiving DL PRS from the gNB1-TRP1 310 on DL PRS Resource ID #3 from the second Resource Set ID ("Resource Set ID#1") 330, receiving DL PRS from the gNB2-TRP1 315 on DL PRS Resource ID #3 from the first Resource Set ID ("Resource Set ID#0") 325, and receiving DL PRS from the gNB3-TRP1 320 on DL PRS Resource ID #1 from the second Resource Set ID ("Resource Set ID#1") 330.

Similarly, UE positioning measurements such as RSTD and PRS RSRP measurements are made between different beams (e.g., between a different pair of DL PRS resources or DL PRS resource sets) - as opposed to different cells as was the case in LTE. A location server 305 (e.g., an embodiment of the LMF 145) uses the UE positioning measurements to determine the UE's location (e.g., absolute location). In addition, there are additional UL positioning methods for the network to exploit in order to compute the target UE's location. Table 4 and Table 5 show the RS-to-measurements mapping required for each of the supported RAT-dependent positioning techniques at the UE and gNB, respectively.

**Table 4: UE Measurements to enable RAT-dependent positioning techniques**

| DL/UL Reference Signals | UE Measurements | To facilitate support of the following positioning techniques |
|---|---|---|
| Rel-16 DL PRS | DL RSTD | DL-TDOA |
| Rel-16 DL PRS | DL PRS RSRP | DL-TDOA, DL-AoD, Multi-RTT |
| Rel-16 DL PRS / Rel-16 SRS for positioning | UE Rx-Tx time difference | Multi-RTT |
| Rel-15 Synchronization Signal Block ("SSB") / CSI-RS for Radio Resource Management ("RRM") | SS-RSRP (RSRP for RRM), SS-RSRQ (for RRM), CSI-RSRP (for RRM), CSI-RSRQ (for RRM), SS-RSRPB (for RRM) | E-CID |

**Table 5: gNB Measurements to enable RAT-dependent positioning techniques**

| DL/UL Reference Signals | gNB Measurements | To facilitate support of the following positioning techniques |
|---|---|---|
| Rel-16 SRS for positioning | UL Relative Time of Arrival ("RTOA") | UL-TDOA |
| Rel-16 SRS for positioning | UL SRS-RSRP | UL-TDOA, UL-AoA, Multi-RTT |
| Rel-16 SRS for positioning, Rel-16 DL PRS | gNB Rx-Tx time difference | Multi-RTT |
| Rel-16 SRS for positioning, | Angle-of-Arrival ("AoA") and Zenith-of-Arrival ("ZoA") | UL-AoA, Multi-RTT |

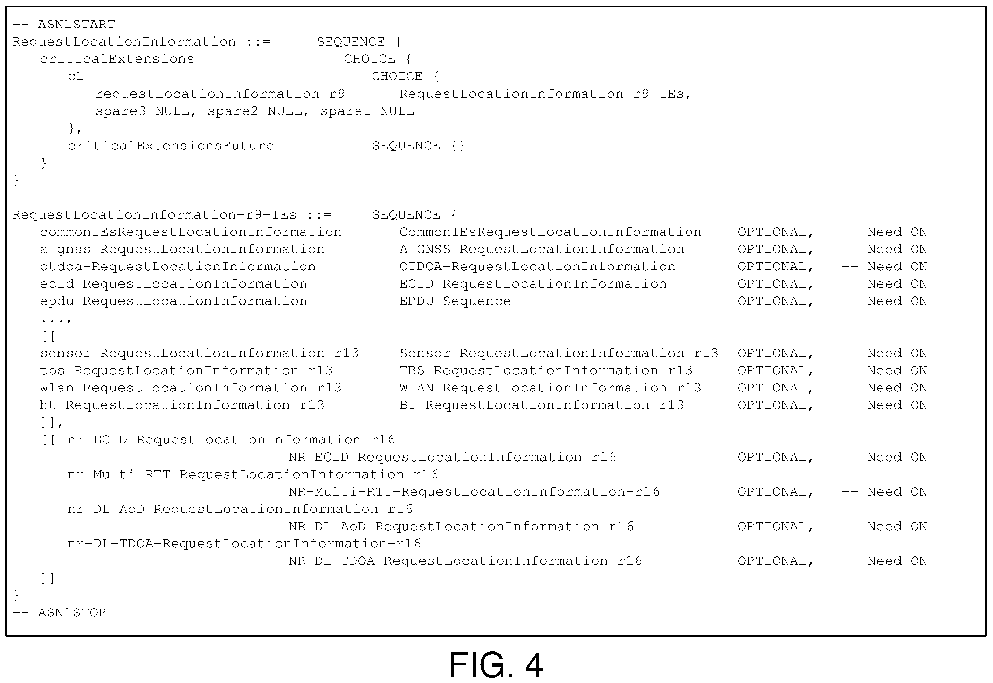

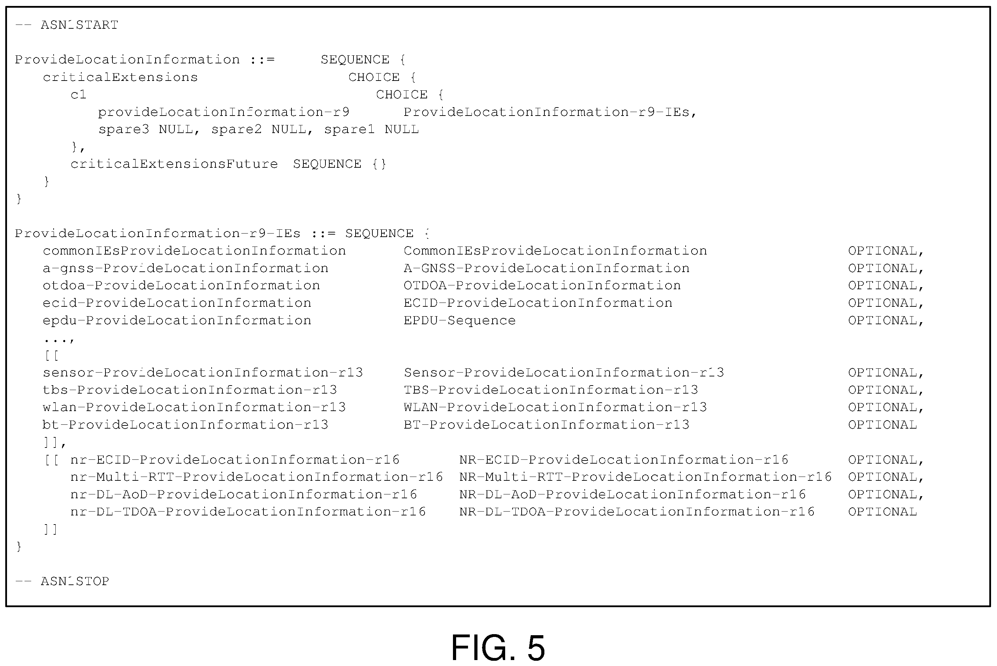

UE measurements which are applicable to DL-based positioning techniques are discussed below. For a conceptual overview, the measurement configuration (see Figure 4) and reporting configuration (see Figure 5) may be provided for each of the supported positioning techniques.

Figure 4 shows one example of an ASN.1 implementation of the *RequestLocationInformation* message body in an LTE Positioning Protocol ("LPP") message. The *RequestLocationInformation* message body in a LPP message is used by the location server to request positioning measurements or a position estimate from the target device.

Figure 5 shows one example of an ASN.1 implementation of the *ProvideLocationInformation* message body in a LPP message. The *ProvideLocationInformation* message body in a LPP message is used by the target device to provide positioning measurements or position estimates to the location server.

Regarding RAT-dependent Positioning Measurements, the different DL measurements including DL PRS RSRP, DL RSTD and UE Rx-Tx Time Difference required for the supported RAT-dependent positioning techniques are shown in Table 6. The following measurement configurations are specified as follows:

- 4 Pair of DL RSTD measurements can be performed per pair of cells. Each measurement is performed between a different pair of DL PRS Resources/Resource Sets with a single reference timing.
- 8 DL PRS RSRP measurements can be performed on different DL PRS resources from the same cell.

**Table 6: DL Measurements required for DL-based positioning methods**

| **DL PRS RSRP** | |
|---|---|
| **Definition** | DL PRS RSRP is defined as the linear average over the power contributions (in [W]) of the resource elements that carry DL PRS reference signals configured for RSRP measurements within the considered measurement frequency bandwidth. For FR1, the reference point for the DL PRS-RSRP shall be the antenna connector of the UE. For FR2, DL PRS-RSRP is to be measured based on the combined signal from antenna elements corresponding to a given receiver branch. For FR1 and FR2, if receiver diversity is in use by the UE, the reported DL PRS-RSRP value shall not be lower than the corresponding DL PRS-RSRP of any of the individual receiver branches. |
| **Applicable for** | RRC_CONNECTED intra-frequency, RRC_CONNECTED inter-frequency |
| **DL RSTD** | |
| **Definition** | DL RSTD is the DL relative timing difference between the positioning node $j$ and the reference positioning node $i$, defined as $T_{SubframeRxj} - T_{SubframeRxi}$, Where: $T_{SubframeRxj}$ is the time when the UE receives the start of one subframe from positioning node $j$. $T_{SubframeRxi}$ is the time when the UE receives the corresponding start of one subframe from positioning node $i$ that is closest in time to the subframe received from positioning node $j$. Multiple DL PRS resources can be used to determine the start of one subframe from a positioning node. For FR1, the reference point for the DL RSTD shall be the antenna connector of the UE. For FR2, the reference point for the DL RSTD shall be the antenna of the UE. |

(continued)

| DL RSTD | |
| --- | --- |
| **Applicable for** | RRC_CONNECTED intra-frequency<br>RRC_CONNECTED inter-frequency |

| UE Rx - Tx time difference | |
| --- | --- |
| **Definition** | The UE Rx - Tx time difference is defined as $T_{UE-RX} - T_{UE-TX}$<br>Where:<br>$T_{UE-RX}$ is the UE received timing of downlink subframe #$i$ from a positioning node, defined by the first detected path in time.<br>$T_{UE-TX}$ is the UE transmit timing of uplink subframe #$j$ that is closest in time to the subframe #i received from the positioning node.<br>Multiple DL PRS resources can be used to determine the start of one subframe of the first arrival path of the positioning node.<br>For FR1, the reference point for $T_{UE-RX}$ measurement shall be the Rx antenna connector of the UE and the reference point for $T_{UE-TX}$ measurement shall be the Tx antenna connector of the UE. For FR2, the reference point for $T_{UE-RX}$ measurement shall be the |
| | Rx antenna of the UE and the reference point for $T_{UE-TX}$ measurement shall be the Tx antenna of the UE. |
| **Applicable for** | RRC_CONNECTED intra-frequency<br>RRC_CONNECTED inter-frequency |

The integrity and reliability of the positioning estimate is defined by the following parameters: Alert Limit ("AL"); Time-to-Alert ("TTA"); Target Integrity Risk ("TIR"); Protection Level ("PL").

The AL parameter indicates the maximum allowable positioning error such that the positioning system is available for the intended application. If the positioning error is beyond the AL parameter, operations are hazardous, and the positioning system should be declared unavailable for the intended application to prevent loss of integrity. Note that when the AL parameter bounds the positioning error in the horizontal plane or on the vertical axis, then it is called Horizontal Alert Limit ("HAL") or Vertical Alert Limit ("VAL"), respectively.

The TTA parameter indicates the probability that the positioning error exceeds the AL parameter without warning the user within the required time defined by the TTA parameter.

The TIR parameter indicates the maximum allowable elapsed time from when the positioning error exceeds the AL parameter until the function providing position integrity annunciates a corresponding alert. Note that the TIR parameter is usually defined as a probability rate per some time unit (e.g., per hour, per second or per independent sample).

The PL parameter is a real-time upper bound on the positioning error at the required degree of confidence, where the degree of confidence is determined by the TIR probability. The PL is a statistical upper-bound of the Positioning Error ("PE") that ensures that the probability per unit of time of the true error being greater than the AL and the PL being less than or equal to the AL, for longer than the TTA, is less than the required TIR, i.e., the PL satisfies the following inequality:

$$\text{Prob per unit of time } [((PE > AL) \text{ \& } (PL <= AL)) \text{ for longer than TTA}] < \text{required TIR}$$

This present disclosure details solutions for enabling enhanced UE-initiated on-demand PRS, which considers the UE's positioning requirements. An overview of the methods is presented as follows:

A first solution describes techniques to explicitly indicate the need and set of desired on-demand PRS parameters to enable network aware UE-initiated on-demand PRS.

A second solution describes techniques to explicitly configure a timer on which the UE may transmit a second on-demand PRS request in the event that the first on-demand PRS request and corresponding received list of pre-defined on-demand PRS configurations does not satisfy the UE's positioning requirements.

A third solution describes techniques to enable the UE or location server to signal the maximum number of pre-defined configurations that may be supported. This is based either on the UE's capability or the type of network deployment.

Note that the three solutions described herein are not mutually exclusive. In fact, the Solutions 1-3 may be implemented in combination with each other to enable enhanced UE-initiated on-demand PRS.

For the purposes of this disclosure, a positioning-related reference signal may be referred to as a reference signal used for positioning procedures/purposes in order to estimate a target-UE's location, e.g., PRS, or based on existing reference signals such as Channel State Information Reference Signal ("CSI-RS") or Sounding Reference Signal ("SRS"). In various embodiments, the term 'PRS' may refer to any signal such as a reference signal, which may or may not be used primarily for positioning.

For the purposes of this disclosure, the term "target-UE" may be used to refer to a UE of interest whose position (absolute or relative) is to be obtained by the network or by the UE itself.

The location server is an entity where the positioning measurements are processed, and the positioning estimate of the UE is computed. As an example, the location server may comprise an LMF.

As used herein, the term "PRS configuration" refers to one or more of time-frequency transmission resources, PRS resource hierarchies in terms of positioning frequency layer, cell lists, TRP lists, PRS resource sets and PRS resources required for PRS transmission, spatial relation parameters, power control parameters, candidate frequency lists for PRS transmission, and/or candidate times for PRS transmission.

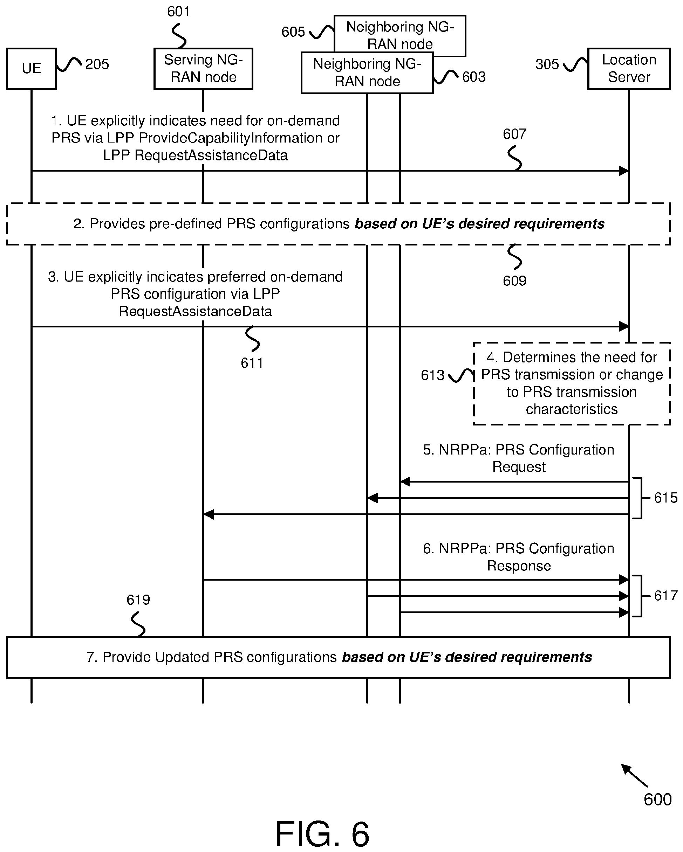

According to embodiments of the first solution, the target-UE may transmit an explicit indication to the location server (e.g., LMF) indicating its need for performing UE-initiated on-demand PRS coupled with a specific set of desired on-demand PRS parameters. This is referred to as a network-aware request where the network may then provision the desired set of on-demand PRS parameters that closely align with the target-UE's positioning requirements (e.g., derived from the internal LCS Client). Figure 6 is an illustration of the network-aware configuration for UE-initiated on-demand PRS.

The serving NG-RAN node (i.e., an implementation of the RAN node 210) may comprise of gNB with associated TRPs. This model avoids the unnecessary overhead in the event that the pre-defined on-demand PRS configurations do not meet the UE's internal positioning requirements. The internal positioning requirements may correspond to set of positioning QoS parameters defined by the following:

- Absolute Positioning Accuracy, e.g., comprising:

  ○ Relative Horizontal and Vertical accuracies
  ○ Lateral and Longitudinal accuracies in the case of Vehicle-to-Everything ("V2X") (note that V2X communication encompasses both Vehicle-to-Infrastructure ("V2I") and Vehicle-to-Vehicle ("V2V") communication)

- Relative Positioning Accuracy, e.g., comprising:

  ○ Relative Horizontal and Vertical accuracies
  ○ Lateral and Longitudinal accuracies in the case of V2X

- Orientation accuracy, e.g., comprising:

  ○ Absolute or relative orientations

- Mobility, e.g., comprising:

  ○ Absolute velocity (horizontal and vertical velocity estimates)
  ○ Relative velocity

- Confidence Intervals

- Integrity and Reliability of the positioning estimate, e.g., comprising AL, TTA, TIR, etc.

As a result, the desired UE-initiated on-demand PRS configuration parameters should at least meet and fulfil the above mentioned QoS parameters.

Figure 6 depicts an exemplary procedure 600 for network-aware, UE-initiated on-demand PRS request, according to embodiments of the disclosure. The procedure 600 involves the UE 205, a serving NG-RAN node 601 (e.g., an embodiment of the RAN node 210 and/or the gNB3-TRP1 320), a first neighboring NG-RAN node 603 (e.g., an embodiment of the RAN node 210 and/or the gNB1-TRP1 310), a second neighboring NG-RAN node 605 (e.g., an embodiment of the RAN node 210 and/or the gNB2-TRP1 315), and the location server 305 (e.g., an LMF).

Note that on-demand PRS transmission allows the location server 305 to control and decide whether PRS is transmitted or not (i.e., by the serving node 601 and/or the non-serving NG-RAN nodes 603 and 605) and to change the characteristics of an ongoing PRS transmission. An on-demand PRS transmission procedure may be initiated either by the UE 205 or the location server 205. The actual PRS changes are requested by the location server 305 irrespective of whether the procedure is UE-initiated or network-initiated (i.e., by location server 305). A detailed description of the steps depicted in Figure 6 is as follows:

At Step 1, the UE 205 may explicitly indicate the need for on-demand PRS configurations, thereby enabling the location server 305 to transmit a set of pre-defined on-demand PRS configurations (see messaging 607). In one embodiment, the indication comprises a flag. Without this flag the location server 305 may not be aware that the UE 205 is initiating an on-demand PRS request to meet its positioning requirements.

In one implementation, the flag may be coupled with the desired on-demand PRS configuration parameters and corresponding value ranges. Multiple desired on-demand PRS configuration parameters may be organized as an Index with each index associated with a configuration ID (see Table 5).

In another implementation, the UE 205 may signal a future area or time indication in which it may require the on-demand PRS configuration parameters, e.g., when moving to a new system information area/new cell/RAN area or a specific time instance or time window in the future, e.g., specified UTC time or the like.

In another implementation, the UE 205 may transmit the UE-initiated on-demand PRS capability and/or device type (e.g., RedCap UE or Advanced UE) via the LPP *ProvideCapabilityInformation* message to indicate to the location server 305 its need for an on-demand PRS configuration at a specific time or area.

Note that the above explicit indications and/or subset of on-demand PRS configuration parameters may be signaled via the LPP *ProvideCapabilityInformation* or LPP *RequestAssistanceData* message.

At Step 2, the location server 305 may provide a set of pre-defined PRS configurations based on Step 1 (see block 609). In various embodiments, the location server 305 may provision at least one of the following options: A) the desired on-demand PRS configuration parameters requested by the UE 205 associated with an ID; and/or B) a set of pre-defined on-demand PRS configurations that best/closely matches the UE's initial request in Step 1, each associated with an ID. Note that the provisioned option(s) may be provided using dedicated signaling (e.g., LPP signaling) or broadcast signaling.

When the location server 305 has provided the pre-defined PRS configurations to the UE 205, the UE 205 is allowed to request on-demand PRS parameters based on a pre-defined PRS configuration ID (e.g., index-based request) or explicit parameter requests that is within the scope of the received pre-defined PRS configurations. Otherwise, the UE 205 may request on-demand PRS parameters via an explicit request within the scope of the allowed parameter list.

At Step 3, the UE 205 may confirm the on-demand PRS configuration parameters by: A) transmitting the desired/preferred on-demand PRS configuration ID to the location server 305 (see messaging 611); and/or B) indicating its preferred order of the PRS configurations. In certain embodiments, the preferred on-demand PRS configuration parameters may be signaled via an LPP *RequestAssistanceData* message.

At Step 4, in response to receiving the preferred on-demand PRS configuration parameters, the location server 305 determines the need for PRS transmission or change to PRS transmission characteristics, e.g., of an ongoing PRS transmission (see block 613).

At Step 5, the location server 305 requests the serving node 601 and non-serving NG-RAN nodes 603 and 605 for new PRS transmission or PRS transmission with changes to the PRS configuration via NR Positioning Protocol Annex ("NRPPa") PRS CONFIGURATION REQUEST message (see messaging 615).

At Step 6, the serving node 601 and non-serving NG-RAN nodes 603 and 605 provide the PRS transmission update in the NRPPa PRS CONFIGURATION RESPONSE message accordingly (see messaging 617).

At Step 7, the location server 305 provides the updated PRS configuration used for PRS transmission via the LPP *ProvideAssistanceData* message that satisfies the UE's positioning requirements (see block 619).

In some implementations, the set of on-demand PRS configuration parameters may comprise at least one or more of the following:

- DL PRS Periodicity;
- DL PRS resource bandwidth;
- DL PRS Quasi-Co-Location ("QCL") information (e.g., including the UE's recommendation for a list of QCL sources);
- DL PRS resource repetition factor;
- Number of DL PRS resource symbols per DL PRS resource;
- DL PRS CombSizeN (this parameter indicates the resource element spacing in each symbol of the DL PRS Resource);
- Number of DL PRS frequency layers; and/or
- ON/OFF indicator (this parameter indicated the recommended indication to switch ON/OFF DL PRS transmission per frequency layer or per TRP or per DL PRS resource set or per DL PRS resource or per UE).

In other implementations, the list of on-demand PRS configurations may already include existing 3GPP Release 16 ("Rel-16") on-demand PRS configurations that do not overlap with the above mentioned other parameters including - but not limited to - muting options, PRS point A reference, etc.

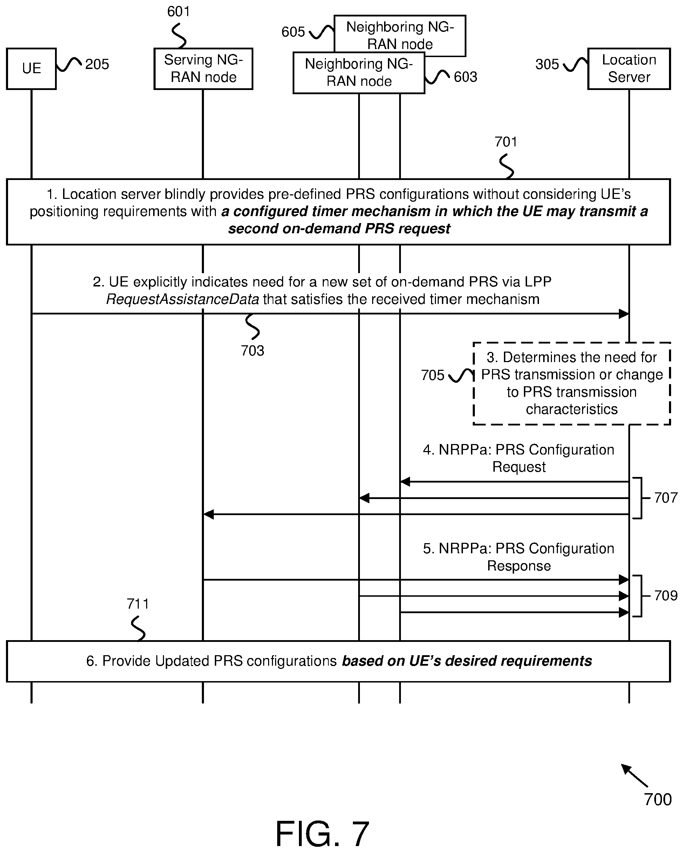

According to embodiments of the second solution, the network may provide a blind pre-defined on-demand PRS configuration. In this case, the location server 305 (e.g., LMF) may also configure a timer mechanism to enable the UE 205 to transmit a second request within the configured timer duration. Figure 7 is an illustration of a network-blind configuration for UE-initiated on-demand PRS.

Figure 7 depicts an exemplary procedure 700 for network-blind, UE-initiated on-demand PRS request, according to embodiments of the disclosure. A detailed description of the depicted steps is as follows:

At Step 1, the location server 305 blindly provides pre-defined PRS configurations without considering the UE's positioning requirements via LPP *ProvideAssistanceData* message (see block 701). The location server 305 may also append a configured timer mechanism, wherein the UE 205 may transmit a second on-demand PRS request with a configured timer duration in the event that none of the pre-defined on-demand PRS configuration parameters meet the positioning requirements of the UE 205.

In one implementation, the on-demand PRS request timer may be configured in terms X units of time (which may comprise milliseconds, seconds, minutes, hours, etc.), wherein upon expiry of the timer, the UE 205 is not permitted to send an on-demand PRS request.

In an alternative implementation, the location server 305 may configure a timer, wherein - once started - the UE 205 may not transmit a subsequent on-demand PRS request (e.g., second on-demand PRS request) until the expiry of the timer.

In another implementation, the location server 305 may configure a reattempt response time duration, wherein the UE 205 is required to provide a second on-demand request within a specified/configured duration, e.g., a window of Y units of time (which may comprise milliseconds, seconds, minutes, hours, etc.). Once the duration/window elapses, the UE 205 is not permitted to send another on-demand PRS request.

In another alternate implementation, the location server 305 may configure a reattempt response time duration, wherein the UE 205 is not allowed to provide a second on-demand request within the specified/configured duration, e.g., Y units of time (which may comprise milliseconds, seconds, minutes, hours, etc.). Once the duration elapses, the UE 205 may be allowed to send another on-demand PRS request.

In yet another alternative implementation, the timer may be according to a standardized time value, e.g., Coordinated Universal Time ("UTC") or the like.

At Step 2, the UE 205 may explicitly indicate the desired on-demand PRS configuration parameters and corresponding value ranges (see messaging 703). The UE 205 starts the timer indication upon reception of the blind pre-defined on-demand PRS configuration from the network.

The value ranges of the desired on-demand PRS parameters may be a delta to the previously received value ranges of the pre-defined sets of on-demand PRS configuration parameters (e.g., transmitted in the first LPP *ProvideAssistanceData* message).

In another implementation, the UE 205 may signal a future area or time indication in which it may require the on-demand PRS configuration parameters, e.g., when moving to a new system information area or specific time instance or time window in the future, e.g., specified UTC time or the like.

The above explicit indications and/or subset of on-demand PRS configuration parameters may be signaled via the LPP *RequestAssistanceData* message.

At Step 3, the location server 305 determines the need for PRS transmission or change to PRS transmission characteristics (see block 705).

At Step 4, the location server 305 requests the serving NG-RAN node 601 and non-serving NG-RAN nodes 603 and 605 for new PRS transmission or PRS transmission with changes to the PRS configuration via NRPPa PRS CONFIGURATION REQUEST message (see messaging 707).

At Step 5, the serving node 601 and non-serving NG-RAN nodes 603 and 605 provide the PRS transmission update in the NRPPa PRS CONFIGURATION RESPONSE message accordingly (see messaging 709).

At Step 6, the location server 305 provides the updated PRS configuration used for PRS transmission via the LPP *ProvideAssistanceData* message that satisfies the UE's positioning requirements (see block 711).

According to embodiments of the third solution, the location server 305 may indicate to the UE 205, the maximum supported pre-defined PRS configurations, which may vary depending on the network deployment. This will enable the UE 205 to request the same pre-defined on-demand PRS configurations that can be supported by the network.

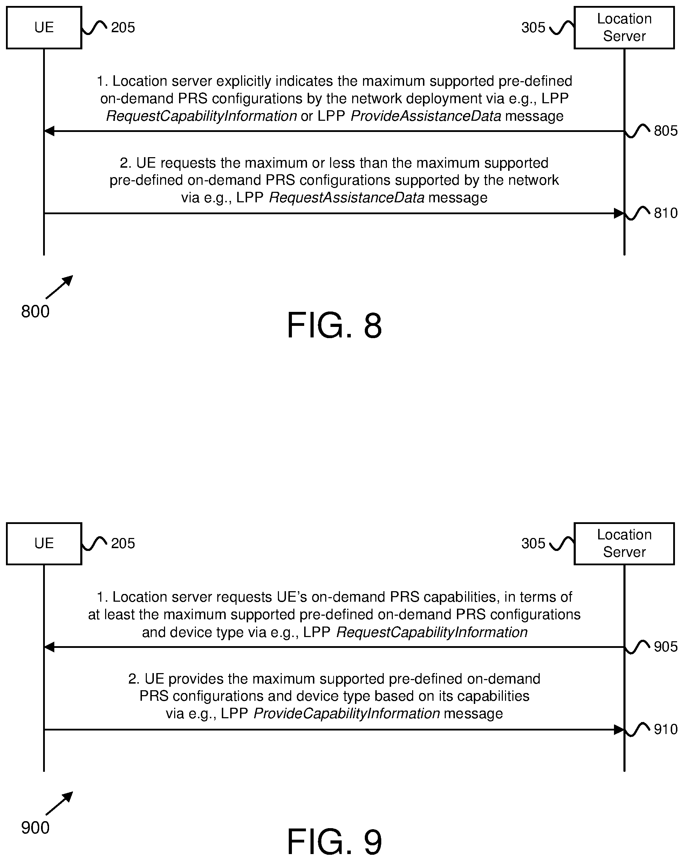

Figure 8 depicts an exemplary signaling mechanism 800 for network indication of supported pre-defined on-demand PRS configurations. As depicted, the location server explicitly indicates the maximum supported pre-defined on-demand PRS configurations by the network deployment, e.g., via LPP *RequestCapabilityInformation* message or LPP *ProvideAssistanceData* message (see messaging 805). The UE 205 requests the maximum (or less than the maximum) supported pre-defined on-demand PRS configurations supported by the network, e.g., via LPP *ProvideCapabilityInformation* message or LPP *RequestAssistanceData* message (see messaging 810).

In another implementation, the UE 205 may indicate the maximum supported pre-defined on-demand PRS configurations and device type via capability information signaling. In yet another implementation, the network may signal the maximum supported on-demand PRS configurations via broadcast signaling, e.g., using an existing or new positioning system information block ("posSIB"). The network may then provide the desired pre-defined on-demand PRS configurations based on the UE's capability, e.g., a reduced capability UE (i.e., a RedCap device) may support lower pre-defined on-demand PRS configurations, when compared to a UE with advanced capabilities. This aspect is illustrated in Figure 9.

Figure 9 depicts exemplary signal flow 900 for UE indication of supported pre-defined on-demand PRS configurations, according to embodiments of the disclosure. As depicted, the location server 305 requests the on-demand PRS capabilities of the UE 205 at least in terms of maximum supported pre-defined on-demand PRS configurations and device type, e.g., via LPP *RequestCapabilityInformation* message (see messaging 905). The UE 205 provides the maximum supported pre-defined on-demand PRS configurations and device type based on its capabilities, e.g., via LPP *ProvideCapabilityInformation* message (see messaging 910).

One exemplary implementation of indicating the maximum supported on-demand PRS configurations may be realized by an index/table/list organized from the least time-frequency resource intensive on-demand PRS configuration to the highest time-frequency resource intensive on-demand PRS configuration as illustrated in Table 7.

**Table 7: Maximum supported on-demand PRS configurations via index indication**

| Index | On-demand PRS configuration Details |
|---|---|
| 1 | Lowest DL PRS configuration, e.g., lowest bandwidth (smallest number of Physical Resource Block ("PRB")), largest periodicity, fewest repetitions, smallest comb size, etc. |
| 2 | DL PRS configuration that is higher than index 1 |
| ⋮ | ⋮ |
| n-1 | Second-highest on-demand PRS configuration |
| n | Highest DL PRS configuration, e.g., highest supported bandwidth (highest number of PRBs), smallest periodicity, largest repetitions, highest comb size, etc. |

Separate index tables (as shown in Table 7) may be signaled for FR1 and FR2. Alternatively, these index tables may be pre-defined. The indices in the table refer to a reference on-demand PRS configuration. For instance, if the UE 205 indicates an index i then the location server 305 knows that it can configure the UE 205 with on-demand PRS configurations which are equivalent to the reference on-demand PRS configuration with index i. Likewise, if the location server 305 indicates an index i then the UE 205 knows that the location server 305 supports on-demand PRS configurations which are equivalent to the reference on-demand PRS configuration with index i.

In another implementation, the index may be implicitly or explicitly ordered according to an order of preference/priority or in yet another implementation according to the highest to the lowest on-demand PRS configuration.

In an alternative implementation, the maximum on-demand PRS configurations that may be indicated by either network or UE 205 may comprise a single value. The single value may correspond to the amount of pre-defined on-demand PRS configurations, the UE 205 may support, e.g., the UE 205 is capable of storing X number of on-demand PRS configurations.

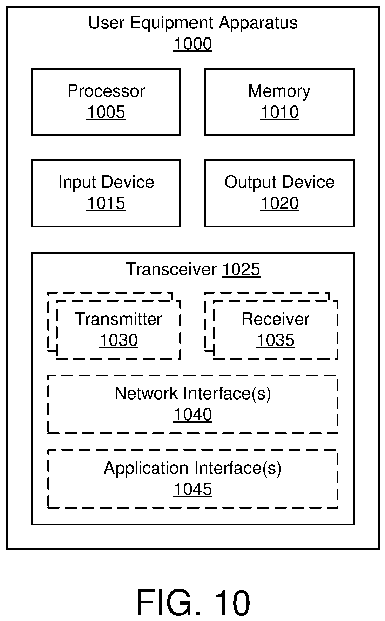

Figure 10 depicts a user equipment apparatus 1000 that may be used for dynamic delivery of an on-demand PRS configuration, according to embodiments of the disclosure. In various embodiments, the user equipment apparatus 1000 is used to implement one or more of the solutions described above. The user equipment apparatus 1000 may be one embodiment of a user endpoint, such as the remote unit 105 and/or the UE 205, as described above. Furthermore, the user equipment apparatus 1000 may include a processor 1005, a memory 1010, an input device 1015, an output device 1020, and a transceiver 1025.

In some embodiments, the input device 1015 and the output device 1020 are combined into a single device, such as a touchscreen. In certain embodiments, the user equipment apparatus 1000 may not include any input device 1015 and/or output device 1020. In various embodiments, the user equipment apparatus 1000 may include one or more of: the processor 1005, the memory 1010, and the transceiver 1025, and may not include the input device 1015 and/or the output device 1020.

As depicted, the transceiver 1025 includes at least one transmitter 1030 and at least one receiver 1035. In some embodiments, the transceiver 1025 communicates with one or more cells (or wireless coverage areas) supported by one or more base units 121. In various embodiments, the transceiver 1025 is operable on unlicensed spectrum. Moreover, the transceiver 1025 may include multiple UE panels supporting one or more beams. Additionally, the transceiver 1025 may support at least one network interface 1040 and/or application interface 1045. The application interface(s) 1045 may support one or more APIs. The network interface(s) 1040 may support 3GPP reference points, such as Uu, N1, PC5, etc. Other network interfaces 1040 may be supported, as understood by one of ordinary skill in the art.

The processor 1005, in one embodiment, may include any known controller capable of executing computer-readable instructions and/or capable of performing logical operations. For example, the processor 1005 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 1005 executes instructions stored in the memory 1010 to perform the methods and routines described herein. The processor 1005 is communicatively coupled to the memory 1010, the input device 1015, the output device 1020, and the transceiver 1025.

In various embodiments, the processor 1005 controls the user equipment apparatus 1000 to implement the above-described UE behaviors. In certain embodiments, the processor 1005 may include an application processor (also known as "main processor") which manages application-domain and operating system ("OS") functions and a baseband processor (also known as "baseband radio processor") which manages radio functions.

In various embodiments, via the transceiver 1025, the processor 1005 transmits, to a location server, an indication of a need for an on-demand PRS, and receives, from the location server, a pre-defined set of on-demand PRS configurations. The processor 1005 determines whether the pre-defined set of on-demand PRS configurations meets a set of positioning requirements of the first apparatus, where the at least one additional on-demand PRS request is to be transmitted only if the pre-defined set of on-demand PRS configurations does not meet one or more positioning requirements of the first apparatus. Additionally, via the transceiver 1025, the processor 1005 transmits, to the location server, a first additional on-demand PRS request and receives, from the location server, a set of on-demand PRS configuration parameters that meet the one or more positioning requirements.

In some embodiments, the indication comprises a flag indicating a need to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain embodiments, the set of one or more indices is ordered according to preference and/or priority. In certain embodiments, the set of one or more indices is ordered from the highest to lowest on-demand PRS configuration.

In some embodiments, the indication further indicates a certain time and/or a certain location associated with the need for the on-demand PRS. In some embodiments, the processor 1005 controls the transceiver 1025 to receive, from the location server, a maximum number of supported on-demand PRS configurations.

In some embodiments, the processor 1005 controls the transceiver 1025 to transmit, to the location server, a maximum number of supported pre-defined DL PRS configurations and/or device type. In certain embodiments, the maximum number is signaled by a single value that corresponds to an amount of pre-defined on-demand PRS configurations that the first apparatus is capable of storing (e.g., the UE is capable of storing X number of on-demand PRS configurations).

In some embodiments, the processor 1005 controls the transceiver 1025 to receive, from the location server, a configured timer condition within which to transmit at least one additional on-demand PRS request. In such embodiments, the first apparatus transmits the first additional on-demand PRS request according to the configured timer condition.

In certain embodiments, in response to the first additional on-demand PRS request being ignored, the processor 1005 controls the transceiver 1025 to transmit at least one subsequent additional request for on-demand PRS configuration parameters while the configured timer condition remains valid. In certain embodiments, the at least one additional request comprises a delta configuration to the prior received list of pre-defined on-demand PRS configurations or stored list of pre-defined on-demand PRS configurations.

In certain embodiments, the configured timer condition comprises a timer, wherein the first apparatus is permitted to transmit a subsequent additional request for on-demand PRS configuration parameters only while the timer is active and not elapsed. In certain embodiments, the configured timer condition comprises a timer indication during which the first apparatus is not permitted to transmit a subsequent additional request for on-demand PRS configuration parameters.

In certain embodiments, the configured timer condition comprises a configured response time indication, wherein the first apparatus is permitted to transmit a subsequent additional request for on-demand PRS configuration parameters only during a time window defined by the configured response time indication.

In some embodiments, to indicate to the location server its need for an on-demand PRS configuration at a specific time or area, the processor 1005 controls the transceiver 1025 to transmit, to the location server, a UE-initiated on-demand PRS capability and/or a device type using a LPP *ProvideCapabilityInformation* message.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the processor 1005 controls the transceiver 1025 to receive, from the location server, an actual maximum number of supported pre-defined DL PRS configurations, wherein the actual maximum number is based on a location server deployment. In some embodiments, the location server comprises a location management function in a core network that adheres to 3GPP technical standards.

The memory 1010, in one embodiment, is a computer readable storage medium. In some embodiments, the memory 1010 includes volatile computer storage media. For example, the memory 1010 may include a RAM, including dynamic RAM ("DRAM"), synchronous dynamic RAM ("SDRAM"), and/or static RAM ("SRAM"). In some embodiments, the memory 1010 includes non-volatile computer storage media. For example, the memory 1010 may include a hard disk drive, a flash memory, or any other suitable non-volatile computer storage device. In some embodiments, the memory 1010 includes both volatile and non-volatile computer storage media.

In some embodiments, the memory 1010 stores data related to dynamic delivery of an on-demand PRS configuration. For example, the memory 1010 may store parameters, configurations, and the like as described above. In certain embodiments, the memory 1010 also stores program code and related data, such as an operating system or other controller algorithms operating on the user equipment apparatus 1000.

The input device 1015, in one embodiment, may include any known computer input device including a touch panel, a button, a keyboard, a stylus, a microphone, or the like. In some embodiments, the input device 1015 may be integrated with the output device 1020, for example, as a touchscreen or similar touch-sensitive display. In some embodiments, the input device 1015 includes a touchscreen such that text may be input using a virtual keyboard displayed on the touchscreen and/or by handwriting on the touchscreen. In some embodiments, the input device 1015 includes two or more different devices, such as a keyboard and a touch panel.

The output device 1020, in one embodiment, is designed to output visual, audible, and/or haptic signals. In some embodiments, the output device 1020 includes an electronically controllable display or display device capable of outputting visual data to a user. For example, the output device 1020 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 1020 may include a wearable display separate from, but communicatively coupled to, the rest of the user equipment apparatus 1000, such as a smart watch, smart glasses, a heads-up display, or the like. Further, the output device 1020 may be a component of a smart phone, a personal digital assistant, a television, a table computer, a notebook (laptop) computer, a personal computer, a vehicle dashboard, or the like.

In certain embodiments, the output device 1020 includes one or more speakers for producing sound. For example, the output device 1020 may produce an audible alert or notification (e.g., a beep or chime). In some embodiments, the output device 1020 includes one or more haptic devices for producing vibrations, motion, or other haptic feedback. In some embodiments, all or portions of the output device 1020 may be integrated with the input device 1015. For example, the input device 1015 and output device 1020 may form a touchscreen or similar touch-sensitive display. In other embodiments, the output device 1020 may be located near the input device 1015.

The transceiver 1025 communicates with one or more network functions of a mobile communication network via one or more access networks. The transceiver 1025 operates under the control of the processor 1005 to transmit messages, data, and other signals and also to receive messages, data, and other signals. For example, the processor 1005 may selectively activate the transceiver 1025 (or portions thereof) at particular times in order to send and receive messages.

The transceiver 1025 includes at least one transmitter 1030 and at least one receiver 1035. One or more transmitters 1030 may be used to provide UL communication signals to a base unit 121, such as the UL transmissions described herein. Similarly, one or more receivers 1035 may be used to receive DL communication signals from the base unit 121, as described herein. Although only one transmitter 1030 and one receiver 1035 are illustrated, the user equipment apparatus 1000 may have any suitable number of transmitters 1030 and receivers 1035. Further, the transmitter(s) 1030 and the receiver(s) 1035 may be any suitable type of transmitters and receivers. In one embodiment, the transceiver 1025 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example, a single chip performing functions for use with both licensed and unlicensed radio spectrum. In some embodiments, the first transmitter/receiver pair and the second transmitter/receiver pair may share one or more hardware components. For example, certain transceivers 1025, transmitters 1030, and receivers 1035 may be implemented as physically separate components that access a shared hardware resource and/or software resource, such as for example, the network interface 1040.

In various embodiments, one or more transmitters 1030 and/or one or more receivers 1035 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 1030 and/or one or more receivers 1035 may be implemented and/or integrated into a multi-chip module. In some embodiments, other components such as the network interface 1040 or other hardware components/circuits may be integrated with any number of transmitters 1030 and/or receivers 1035 into a single chip. In such embodiment, the transmitters 1030 and receivers 1035 may be logically configured as a transceiver 1025 that uses one or more common control signals or as modular transmitters 1030 and receivers 1035 implemented in the same hardware chip or in a multi-chip module.

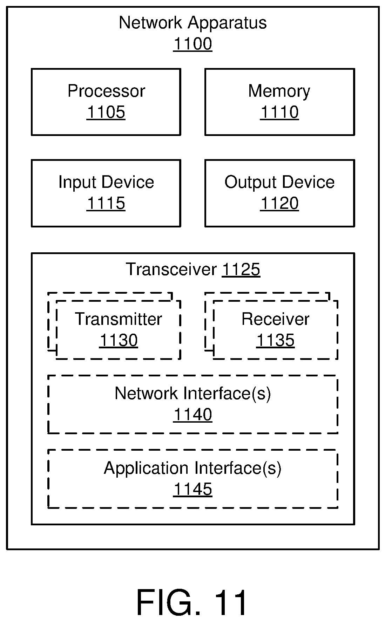

Figure 11 depicts a network apparatus 1100 that may be used for dynamic delivery of an on-demand PRS configuration, according to embodiments of the disclosure. In one embodiment, the network apparatus 1100 may be one implementation of a network endpoint, such as the base unit 121 and/or RAN node 210, as described above. In another embodiment, the network apparatus 1100 may be an implementation of a location management entity, such as the LMF 145 and/or the location server 305. Furthermore, the network apparatus 1100 may include a processor 1105, a memory 1110, an input device 1115, an output device 1120, and a transceiver 1125.

In some embodiments, the input device 1115 and the output device 1120 are combined into a single device, such as a touchscreen. In certain embodiments, the network apparatus 1100 may not include any input device 1115 and/or output device 1120. In various embodiments, the network apparatus 1100 may include one or more of: the processor 1105, the memory 1110, and the transceiver 1125, and may not include the input device 1115 and/or the output device 1120.

As depicted, the transceiver 1125 includes at least one transmitter 1130 and at least one receiver 1135. Here, the transceiver 1125 communicates with one or more remote units 105. Additionally, the transceiver 1125 may support at least one network interface 1140 and/or application interface 1145. The application interface(s) 1145 may support one or more APIs. The network interface(s) 1140 may support 3GPP reference points, such as Uu, N1, N2 and N3. Other network interfaces 1140 may be supported, as understood by one of ordinary skill in the art.

The processor 1105, in one embodiment, may include any known controller capable of executing computer-readable instructions and/or capable of performing logical operations. For example, the processor 1105 may be a microcontroller, a microprocessor, a CPU, a GPU, an auxiliary processing unit, a FPGA, or similar programmable controller. In some embodiments, the processor 1105 executes instructions stored in the memory 1110 to perform the methods and routines described herein. The processor 1105 is communicatively coupled to the memory 1110, the input device 1115, the output device 1120, and the transceiver 1125.

In various embodiments, the network apparatus 1100 is a RAN node (e.g., gNB) that communicates with one or more UEs, as described herein. In such embodiments, the processor 1105 controls the network apparatus 1100 to perform the above-described RAN behaviors. When operating as a RAN node, the processor 1105 may include an application processor (also known as "main processor") which manages application-domain and operating system ("OS") functions and a baseband processor (also known as "baseband radio processor") which manages radio functions.

In various embodiments, via the transceiver 1125, the processor 1105 receives, from a UE, an indication of a need for on-demand PRS and transmits, to the UE, a pre-defined list of on-demand PRS configurations. Additionally, via the transceiver 1125, the processor 1105 receives, from the UE, a first additional on-demand PRS request corresponding to one or more positioning requirements of the UE and transmits, to the UE, a set of on-demand PRS configuration parameters that meet the one or more positioning requirements.

In some embodiments, the indication comprises a flag indicating a need to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain embodiments, the set of one or more indices is ordered according to preference and/or priority. In certain embodiments, the set of one or more indices is ordered from the highest to lowest on-demand PRS configuration.

In some embodiments, the indication further indicates a certain time and/or a certain location associated with the need for the on-demand PRS. In some embodiments, the processor 1105 controls the transceiver 1125 to transmit, to the UE, a maximum number of supported on-demand PRS configurations.

In some embodiments, the processor 1105 controls the transceiver 1125 to receive, from the UE, a maximum number of supported pre-defined DL PRS configurations and/or device type. In certain embodiments, the maximum number is signaled by a single value that corresponds to an amount of pre-defined on-demand PRS configurations that the UE is capable of storing (e.g., the UE is capable of storing X number of on-demand PRS configurations).

In some embodiments, the processor 1105 controls the transceiver 1125 to transmit, to the UE, a configured timer condition within which to transmit at least one additional on-demand PRS request. In such embodiments, the UE transmits the first additional on-demand PRS request according to the configured timer condition.

In certain embodiments, in response to the first additional on-demand PRS request being ignored, the processor 1105 controls the transceiver 1125 to receive at least one subsequent additional request for on-demand PRS configuration parameters while the configured timer condition remains valid. In certain embodiments, the at least one additional request may comprise a delta configuration to the prior received list of pre-defined on-demand PRS configurations or stored list of pre-defined on-demand PRS configurations.

In certain embodiments, the configured timer condition comprises a timer, wherein the UE is permitted to transmit a subsequent additional request for on-demand PRS configuration parameters only while the timer is active and not elapsed. In certain embodiments, the configured timer condition comprises a timer indication during which the UE is not permitted to transmit a subsequent additional request for on-demand PRS configuration parameters.

In certain embodiments, the configured timer condition comprises a configured response time indication, wherein the UE is permitted to transmit a subsequent additional request for on-demand PRS configuration parameters only during a time window defined by the configured response time indication.

In some embodiments, the processor 1105 controls the transceiver 1125 to receive, from the UE, a UE-initiated on-demand PRS capability and/or a device type using a LPP *ProvideCapabilityInformation* message to indicate to the network apparatus 1100 the UE's need for an on-demand PRS configuration at a specific time or area.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the processor 1105 controls the transceiver 1125 to transmit, to the UE, an actual maximum number of supported pre-defined DL PRS configurations, wherein the actual maximum number is based on a location server deployment of the mobile communication network. In some embodiments, the network apparatus 1100 comprises a location management function in a core network that adheres to 3GPP technical standards.

The memory 1110, in one embodiment, is a computer readable storage medium. In some embodiments, the memory 1110 includes volatile computer storage media. For example, the memory 1110 may include a RAM, including DRAM, SDRAM, and/or SRAM. In some embodiments, the memory 1110 includes non-volatile computer storage media. For example, the memory 1110 may include a hard disk drive, a flash memory, or any other suitable non-volatile computer storage device. In some embodiments, the memory 1110 includes both volatile and non-volatile computer storage media.

In some embodiments, the memory 1110 stores data related to dynamic delivery of an on-demand PRS configuration. For example, the memory 1110 may store parameters, configurations, and the like, as described above. In certain embodiments, the memory 1110 also stores program code and related data, such as an operating system or other controller algorithms operating on the network apparatus 1100.

The input device 1115, in one embodiment, may include any known computer input device including a touch panel, a button, a keyboard, a stylus, a microphone, or the like. In some embodiments, the input device 1115 may be integrated with the output device 1120, for example, as a touchscreen or similar touch-sensitive display. In some embodiments, the input device 1115 includes a touchscreen such that text may be input using a virtual keyboard displayed on the touchscreen and/or by handwriting on the touchscreen. In some embodiments, the input device 1115 includes two or more different devices, such as a keyboard and a touch panel.

The output device 1120, in one embodiment, is designed to output visual, audible, and/or haptic signals. In some embodiments, the output device 1120 includes an electronically controllable display or display device capable of outputting visual data to a user. For example, the output device 1120 may include, but is not limited to, an LCD display, an LED display, an OLED display, a projector, or similar display device capable of outputting images, text, or the like to a user. As another, non-limiting, example, the output device 1120 may include a wearable display separate from, but communicatively coupled to, the rest of the network apparatus 1100, such as a smart watch, smart glasses, a heads-up display, or the like. Further, the output device 1120 may be a component of a smart phone, a personal digital assistant, a television, a table computer, a notebook (laptop) computer, a personal computer, a vehicle dashboard, or the like.

In certain embodiments, the output device 1120 includes one or more speakers for producing sound. For example, the output device 1120 may produce an audible alert or notification (e.g., a beep or chime). In some embodiments, the output device 1120 includes one or more haptic devices for producing vibrations, motion, or other haptic feedback. In some embodiments, all or portions of the output device 1120 may be integrated with the input device 1115. For example, the input device 1115 and output device 1120 may form a touchscreen or similar touch-sensitive display. In other embodiments, the output device 1120 may be located near the input device 1115.

The transceiver 1125 includes at least one transmitter 1130 and at least one receiver 1135. One or more transmitters 1130 may be used to communicate with the UE, as described herein. Similarly, one or more receivers 1135 may be used to communicate with network functions in the PLMN and/or RAN, as described herein. Although only one transmitter 1130 and one receiver 1135 are illustrated, the network apparatus 1100 may have any suitable number of transmitters 1130 and receivers 1135. Further, the transmitter(s) 1130 and the receiver(s) 1135 may be any suitable type of transmitters and receivers.

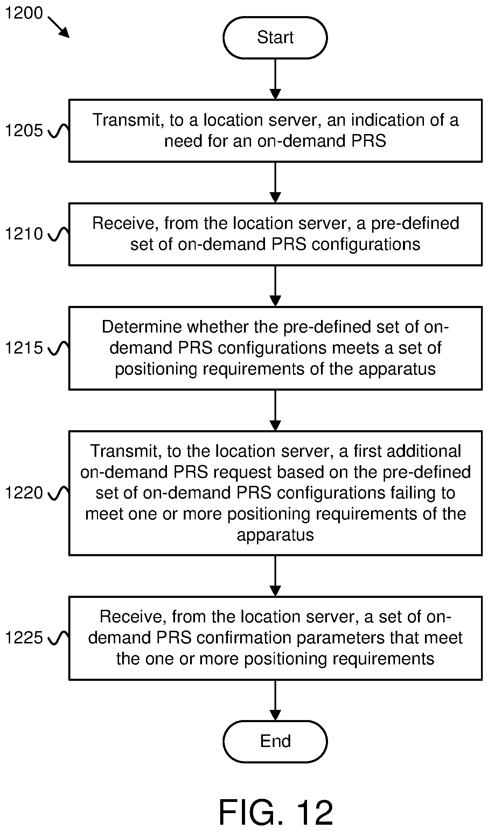

Figure 12 depicts one embodiment of a method 1200 for dynamic delivery of an on-demand PRS configuration, according to embodiments of the disclosure. In various embodiments, the method 1200 is performed by a communication device, such as a remote unit 105, a UE 205, and/or the user equipment apparatus 1000, as described above. In some embodiments, the method 1200 is performed by a processor, such as a microcontroller, a microprocessor, a CPU, a GPU, an auxiliary processing unit, a FPGA, or the like.

The method 1200 includes transmitting 1205, to a location server, an indication of a need for an on-demand PRS. Here, the indication may be an explicit indication (e.g., a flag or specific parameter value) or an implicit indication (e.g., a message type). The method 1200 includes receiving 1210, from the location server, a pre-defined set of on-demand PRS configurations. The method 1200 includes determining 1215 whether the pre-defined set of on-demand PRS configurations meets a set of positioning requirements of the apparatus. The method 1200 includes transmitting 1220, to the location server, a first additional on-demand PRS request based on the pre-defined set of on-demand PRS configurations failing to meet one or more positioning requirements of the communication device. Here, the first additional on-demand PRS request may indicate the communication device's desired on-demand PRS configuration corresponding to positioning requirements. The method 1200 includes receiving 1225, from the location server, a set of on-demand PRS configuration parameters that meet the one or more positioning requirements (e.g., corresponding to the communication device's desired on-demand PRS configuration).

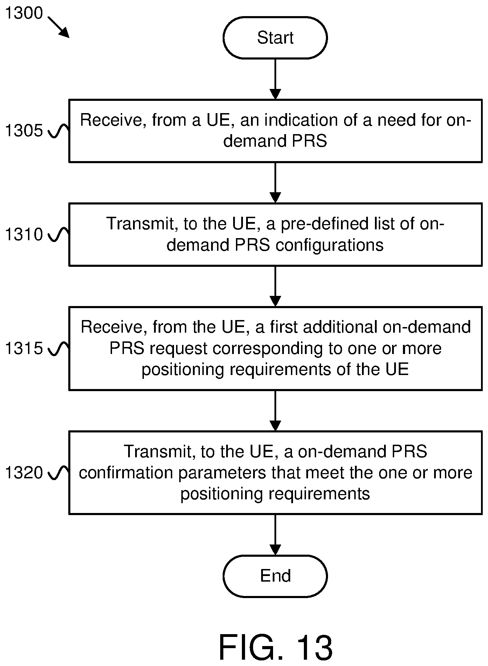

Figure 13 depicts one embodiment of a method 1300 for dynamic delivery of an on-demand PRS configuration, according to embodiments of the disclosure. In various embodiments, the method 1300 is performed by a network entity, such as a base unit 121, an LMF 145, the RAN node 210, the location server 305, and/or the network apparatus 1100, as described above. In some embodiments, the method 1300 is performed by a processor, such as a microcontroller, a microprocessor, a CPU, a GPU, an auxiliary processing unit, a FPGA, or the like.

The method 1300 includes receiving 1305, from a UE, an indication of a need for an on-demand PRS. Here, the indication may be an explicit indication (e.g., a flag or specific parameter value) or an implicit indication (e.g., a message type). The method 1300 includes transmitting 1310, to the UE, a pre-defined set of on-demand PRS configurations. The method 1300 includes receiving 1315 receive, from the UE, a first additional on-demand PRS request corresponding to one or more positioning requirements of the UE. Here, the first additional on-demand PRS request may indicate the UE's desired on-demand PRS configuration corresponding to positioning requirements. The method 1300 includes transmitting 1320, to the UE, a set of on-demand PRS configuration parameters that meet the one or more positioning requirements (e.g., corresponding to the UE's desired on-demand PRS configuration).

Disclosed herein is a first apparatus for dynamic, on-demand PRS configurations, according to embodiments of the disclosure. The first apparatus may be implemented by a communication device, such as a remote unit 105, a UE 205, and/or the user equipment apparatus 1000, as described above. The first apparatus includes a processor coupled to a memory, the processor configured to cause the first apparatus to: A) transmit, to a location server, an indication of a need for an on-demand PRS; B) receive, from the location server, a pre-defined set of on-demand PRS configurations; C) determine whether the pre-defined set of on-demand PRS configurations meets a set of positioning requirements of the first apparatus; D) transmit, to the location server, a first additional on-demand PRS request based on the pre-defined set of on-demand PRS configurations failing to meet one or more positioning requirements of the first apparatus; and E) receive, from the location server, a set of on-demand PRS configuration parameters that meet the one or more positioning requirements.

In some embodiments, the indication comprises a flag requesting to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain embodiments, the set of one or more indices is ordered according to preference and/or priority. In certain embodiments, the set of one or more indices is ordered from the highest to lowest on-demand PRS configuration.

In some embodiments, the indication further indicates a certain time and/or a certain location associated with the need for the on-demand PRS. In some embodiments, the processor is configured to cause the first apparatus to receive, from the location server, a maximum number of supported on-demand PRS configurations.

In some embodiments, the processor is configured to cause the first apparatus to transmit, to the location server, a maximum number of supported pre-defined DL PRS configurations and/or device type. In certain embodiments, the maximum number is signaled by a single value that corresponds to an amount of pre-defined on-demand PRS configurations that the first apparatus is capable of storing (e.g., the UE is capable of storing X number of on-demand PRS configurations).

In some embodiments, the processor is configured to cause the first apparatus to receive, from the location server, a configured timer condition within which to transmit at least one additional on-demand PRS request. In such embodiments, the first apparatus transmits the first additional on-demand PRS request according to the configured timer condition.

In certain embodiments, in response to the first additional on-demand PRS request being ignored, the processor is configured to cause the first apparatus to transmit at least one subsequent additional request for on-demand PRS configuration parameters while the configured timer condition remains valid. In certain embodiments, the at least one additional request comprises a delta configuration to the prior received list of pre-defined on-demand PRS configurations or stored list of pre-defined on-demand PRS configurations.

In certain embodiments, the configured timer condition comprises a timer, wherein the first apparatus is permitted to transmit a subsequent additional request for on-demand PRS configuration parameters only while the timer is active and not elapsed. In certain embodiments, the configured timer condition comprises a timer indication during which the first apparatus is not permitted to transmit a subsequent additional request for on-demand PRS configuration parameters.

In certain embodiments, the configured timer condition comprises a configured response time indication, wherein the first apparatus is permitted to transmit a subsequent additional request for on-demand PRS configuration parameters only during a time window defined by the configured response time indication.

In some embodiments, to indicate to the location server its need for an on-demand PRS configuration at a specific time or area, the processor is configured to cause the first apparatus to transmit, to the location server, a UE-initiated on-demand PRS capability and/or a device type using a LPP *ProvideCapabilityInformation* message.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the processor is configured to cause the first apparatus to receive, from the location server, an actual maximum number of supported pre-defined DL PRS configurations, wherein the actual maximum number is based on a location server deployment. In some embodiments, the location server comprises a location management function in a core network that adheres to 3GPP technical standards.

Disclosed herein is a first method for dynamic, on-demand PRS configurations, according to embodiments of the disclosure. The first method may be performed by a communication device, such as a remote unit 105, a UE 205, and/or the user equipment apparatus 1000, as described above. The first method includes transmitting, to a location server, an indication of a need for an on-demand PRS and receiving, from the location server, a pre-defined set of on-demand PRS configurations. The first method includes determining whether the pre-defined set of on-demand PRS configurations meets a set of positioning requirements of the communication device and transmitting, to the location server, a first additional on-demand PRS request based on the pre-defined set of on-demand PRS configurations failing to meet one or more positioning requirements of the communication device. The first method includes receiving, from the location server, a set of on-demand PRS configuration parameters that meet the one or more positioning requirements.

In some embodiments, the indication comprises a flag requesting to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain In certain embodiments, the set of one or more indices is ordered from the highest to lowest on-demand PRS configuration.

In some embodiments, the indication further indicates a certain time and/or a certain location associated with the need for the on-demand PRS. In some embodiments, the first method includes receiving, from the location server, a maximum number of supported on-demand PRS configurations.

In some embodiments, the first method includes transmitting, to the location server, a maximum number of supported pre-defined DL PRS configurations and/or device type. In certain embodiments, the maximum number is signaled by a single value that corresponds to an amount of pre-defined on-demand PRS configurations that the communication device is capable of storing (e.g., the UE is capable of storing X number of on-demand PRS configurations).

In some embodiments, the first method includes receiving, from the location server, a configured timer condition within which to transmit at least one additional on-demand PRS request. In such embodiments, the communication device transmits the first additional on-demand PRS request according to the configured timer condition.

In certain embodiments, in response to the first additional on-demand PRS request being ignored, the first method includes transmitting at least one subsequent additional request for on-demand PRS configuration parameters while the configured timer condition remains valid. In certain embodiments, the at least one additional request comprises a delta configuration to the prior received list of pre-defined on-demand PRS configurations or stored list of pre-defined on-demand PRS configurations.

In certain embodiments, the configured timer condition comprises a timer, wherein the communication device is permitted to transmit a subsequent additional request for on-demand PRS configuration parameters only while the timer is active and not elapsed. In certain embodiments, the configured timer condition comprises a timer indication during which the communication device is not permitted to transmit a subsequent additional request for on-demand PRS configuration parameters.

In certain embodiments, the configured timer condition comprises a configured response time indication, wherein the communication device is permitted to transmit a subsequent additional request for on-demand PRS configuration parameters only during a time window defined by the configured response time indication.

In some embodiments, to indicate to the location server its need for an on-demand PRS configuration at a specific time or area, the first method includes transmitting, to the location server, a UE-initiated on-demand PRS capability and/or a device type using a LPP *ProvideCapabilityInformation* message.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the first method includes receiving, from the location server, an actual maximum number of supported pre-defined DL PRS configurations, wherein the actual maximum number is based on a location server deployment. In some embodiments, the location server comprises a location management function in a core network that adheres to 3GPP technical standards.

Disclosed herein is a second apparatus for dynamic, on-demand PRS configurations, according to embodiments of the disclosure. The second apparatus may be implemented by a network entity, such as a base unit 121, an LMF 145, the RAN node 210, the location server 305, and/or the network apparatus 1100, as described above. The second apparatus includes a processor coupled to a memory, the processor configured to cause the second apparatus to: A) receive, from a UE, an indication of a need for on-demand PRS; B) transmit, to the UE, a pre-defined list of on-demand PRS configurations; C) receive, from the UE, a first additional on-demand PRS request corresponding to one or more positioning requirements of the UE; and D) transmit, to the UE, a set of on-demand PRS configuration parameters that meet the one or more positioning requirements.

In some embodiments, the indication comprises a flag requesting to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain embodiments, the set of one or more indices is ordered according to preference and/or priority. In certain embodiments, the set of one or more indices is ordered from the highest to lowest on-demand PRS configuration.

In some embodiments, the indication further indicates a certain time and/or a certain location associated with the need for the on-demand PRS. In some embodiments, the processor is configured to cause the second apparatus to transmit, to the UE, a maximum number of supported on-demand PRS configurations.

In some embodiments, the processor is configured to cause the second apparatus to receive, from the UE, a maximum number of supported pre-defined DL PRS configurations and/or device type. In certain embodiments, the maximum number is signaled by a single value that corresponds to an amount of pre-defined on-demand PRS configurations that the UE is capable of storing (e.g., the UE is capable of storing X number of on-demand PRS configurations).

In some embodiments, the processor is configured to cause the second apparatus to transmit, to the UE, a configured timer condition within which to transmit at least one additional on-demand PRS request. In such embodiments, the UE transmits the first additional on-demand PRS request according to the configured timer condition.

In certain embodiments, in response to the first additional on-demand PRS request being ignored, the processor is configured to cause the second apparatus to receive at least one subsequent additional request for on-demand PRS configuration parameters while the configured timer condition remains valid. In certain embodiments, the at least one additional request may comprise a delta configuration to the prior received list of pre-defined on-demand PRS configurations or stored list of pre-defined on-demand PRS configurations.

In certain embodiments, the configured timer condition comprises a timer, wherein the UE is permitted to transmit a subsequent additional request for on-demand PRS configuration parameters only while the timer is active and not elapsed. In certain embodiments, the configured timer condition comprises a timer indication during which the UE is not permitted to transmit a subsequent additional request for on-demand PRS configuration parameters.

In certain embodiments, the configured timer condition comprises a configured response time indication, wherein the UE is permitted to transmit a subsequent additional request for on-demand PRS configuration parameters only during a time window defined by the configured response time indication.

In some embodiments, the processor is configured to cause the second apparatus to receive, from the UE, a UE-initiated on-demand PRS capability and/or a device type using a LPP *ProvideCapabilityInformation* message to indicate to the second apparatus the UE's need for an on-demand PRS configuration at a specific time or area.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the processor is configured to cause the second apparatus to transmit, to the UE, an actual maximum number of supported pre-defined DL PRS configurations, wherein the actual maximum number is based on a location server deployment of the mobile communication network. In some embodiments, the second apparatus comprises a location management function in a core network that adheres to 3GPP technical standards.

Disclosed herein is a second method for dynamic, on-demand PRS configurations, according to embodiments of the disclosure. The second method may be performed by a network entity, such as a base unit 121, an LMF 145, the RAN node 210, the location server 305, and/or the network apparatus 1100, as described above. The second method includes receiving, from a UE, an indication of a need for on-demand PRS and transmitting, to the UE, a pre-defined list of on-demand PRS configurations. The second method includes receiving, from the UE, a first additional on-demand PRS request corresponding to one or more positioning requirements of the UE and transmitting, to the UE, a set of on-demand PRS configuration parameters that meet the one or more positioning requirements.

In some embodiments, the indication comprises a flag requesting to receive the pre-defined set of on-demand PRS configurations. In certain embodiments, the indication is accompanied by a request for a set of desired on-demand PRS configuration parameters and/or a subset of on-demand PRS configuration parameters belonging to a larger set.

In some embodiments, the first additional on-demand PRS request comprises a set of one or more indices, each referencing a corresponding pre-defined PRS configuration. In certain embodiments, the set of one or more indices is ordered according to preference and/or priority. In certain embodiments, the set of one or more indices is ordered from the highest to lowest on-demand PRS configuration.

In some embodiments, the indication further indicates a certain time and/or a certain location associated with the need for the on-demand PRS. In some embodiments, the second method includes transmitting, to the UE, a maximum number of supported on-demand PRS configurations.

In some embodiments, the second method includes receiving, from the UE, a maximum number of supported pre-defined DL PRS configurations and/or device type. In certain embodiments, the maximum number is signaled by a single value that corresponds to an amount of pre-defined on-demand PRS configurations that the UE is capable of storing (e.g., the UE is capable of storing X number of on-demand PRS configurations).

In some embodiments, the second method includes transmitting, to the UE, a configured timer condition within which to transmit at least one additional on-demand PRS request. In such embodiments, the UE transmits the first additional on-demand PRS request according to the configured timer condition.

In certain embodiments, in response to the first additional on-demand PRS request being ignored, the second method includes receiving at least one subsequent additional request for on-demand PRS configuration parameters while the configured timer condition remains valid. In certain embodiments, the at least one additional request may comprise a delta configuration to the prior received list of pre-defined on-demand PRS configurations or stored list of pre-defined on-demand PRS configurations.

In certain embodiments, the configured timer condition comprises a timer, wherein the UE is permitted to transmit a subsequent additional request for on-demand PRS configuration parameters only while the timer is active and not elapsed. In certain embodiments, the configured timer condition comprises a timer indication during which the UE is not permitted to transmit a subsequent additional request for on-demand PRS configuration parameters.

In certain embodiments, the configured timer condition comprises a configured response time indication, wherein the UE is permitted to transmit a subsequent additional request for on-demand PRS configuration parameters only during a time window defined by the configured response time indication.

In some embodiments, the second method includes receiving, from the UE, a UE-initiated on-demand PRS capability and/or a device type using a LPP *ProvideCapabilityInformation* message to indicate to the network entity the DE's need for an on-demand PRS configuration at a specific time or area.

In some embodiments, the indication is an explicit indication comprising one or more of the following: DL PRS configuration parameters, a DL PRS periodicity, a DL PRS resource bandwidth, DL PRS QCL information, a DL PRS resource repetition factor, a number of DL PRS symbols per DL PRS resource, a DL PRS comb size, DL PRS frequency layers, a DL PRS on indicator, a DL PRS off indicator, or a combination thereof.

In some embodiments, the second method includes transmitting, to the UE, an actual maximum number of supported pre-defined DL PRS configurations, wherein the actual maximum number is based on a location server deployment of the mobile communication network. In some embodiments, the network entity comprises a location management function in a core network that adheres to 3GPP technical standards.

Embodiments may be practiced in other specific forms. The described embodiments are to be considered in all respects only as illustrative and not restrictive. The scope of the invention is, therefore, indicated by the appended claims rather than by the foregoing description.

**Claims**

1. A User Equipment, UE, (1000), for wireless communication, comprising:

   a memory (1010); and

a processor (1005) coupled to the memory, the processor configured to cause the UE to:

transmit (1205), to a location server (1100), an indication of a need for an on-demand Positioning Reference Signal, PRS;

receive (1210), from the location server, a pre-defined set of on-demand PRS configurations;

determine (1215) whether the pre-defined set of on-demand PRS configurations meets a set of positioning requirements of the UE;

transmit (1220), to the location server, a first additional on-demand PRS request based on the pre-defined set of on-demand PRS configurations; and

receive (1225), from the location server, a set of on-demand PRS configuration parameters that meet the one or more positioning requirements; and

receive, from the location server, an actual maximum number of supported pre-defined downlink, DL, PRS configurations.

2. The UE of claim 1, wherein the indication comprises a flag requesting to receive the pre-defined set of on-demand PRS configurations.

3. The UE of claim 2, wherein the indication is accompanied by a request for a set of desired on-demand PRS configuration parameters or a subset of on-demand PRS configuration parameters belonging to a larger set.

4. The UE of claim 1, wherein the first additional on-demand PRS request comprises a set of one or more indices, each referencing a corresponding pre-defined PRS configuration.

5. The UE of claim 4, wherein the set of one or more indices is ordered according to preference or priority.

6. The UE of claim 4, wherein the set of one or more indices is ordered from the highest to lowest on-demand PRS configuration.

7. The UE of claim 1, wherein the indication further indicates a certain time or a certain location associated with the need for the on-demand PRS.

8. The UE of claim 1, wherein the processor is configured to cause the UE to transmit, to the location server, a maximum number of supported pre-defined downlink, DL, PRS configurations or a device type, optionally wherein the maximum number is signaled by a single value that corresponds to an amount of pre-defined on-demand PRS configurations that the UE is capable of storing.

9. The UE of claim 1, wherein the processor is configured to cause the UE to receive, from the location server, a maximum number of supported on-demand PRS configurations.

10. The UE of claim 1, wherein, to indicate the need for an on-demand PRS configuration at a specific time or area, the processor is configured to cause the UE to transmit, to the location server, a UE-initiated on-demand PRS capability or a device type using a Long-term evolution Positioning Protocol, LPP, *ProvideCapabilityInformation* message.

11. A method (1200) for wireless communication at a User Equipment, UE, (1000), the method comprising:

transmitting (1205), to a location server (1100), an indication of a need for an on-demand Positioning Reference Signal, PRS;

receiving (1210), from the location server, a pre-defined set of on-demand PRS configurations;

determining (1215) whether the pre-defined set of on-demand PRS configurations meets a set of positioning requirements of the UE;

transmitting (1220), to the location server, a first additional on-demand PRS request based on the pre-defined set of on-demand PRS configurations; and

receiving (1225), from the location server, a set of on-demand PRS configuration parameters that meet the one or more positioning requirements; and

receiving, from the location server, an actual maximum number of supported pre-defined downlink, DL, PRS configurations.

12. A location server (1100) for wireless communication, comprising:

a memory (1110); and

a processor (1105) coupled to the memory, the processor configured to cause the location server to:

receive (1305), from a User Equipment, UE, (1000), an indication of a need for on-demand Positioning Reference Signal, PRS;

transmit (1310), to the UE, a pre-defined list of on-demand PRS configurations;

receive (1315), from the UE, a first additional on-demand PRS request corresponding to one or more positioning requirements of the UE; and

transmit (1320), to the UE, a set of on-demand PRS configuration parameters that meet the one or more positioning requirements; and

transmit, to the UE, an actual maximum number of supported pre-defined downlink, DL, PRS configurations.

13. The apparatus of claim 12, wherein the actual maximum number is based on a location server deployment.

14. The location server of claim 12, wherein the indication comprises one or more of the following: downlink, DL, PRS configuration parameters, a DL PRS periodicity, a DL PRS resource bandwidth, DL PRS quasi-co-location, QCL, information, a DL PRS resource repetition factor, a number of DL PRS symbols per DL PRS resource, a DL PRS comb size, DL PRS frequency layers, a DL PRS on indicator, a DL PRS off indicator, or a combination thereof.

15. A method (1300) for wireless communication at a location server (1100), the method comprising:

receiving (1305), from a User Equipment, UE, (1000), an indication of a need for on-demand Positioning Reference Signal, PRS;

transmitting (1310), to the UE, a pre-defined list of on-demand PRS configurations;

receiving (1315), from the UE, a first additional on-demand PRS request corresponding to one or more positioning requirements of the UE;

transmitting (1320), to the UE, a set of on-demand PRS configuration parameters that meet the one or more positioning requirements; and

transmitting, to the UE, an actual maximum number of supported pre-defined downlink, DL, PRS configurations.

**Patentansprüche**

1. Teilnehmergerät, UE (1000), zur drahtlosen Kommunikation, umfassend:

einen Speicher (1010); und

einen Prozessor (1005), der an den Speicher gekoppelt ist, wobei der Prozessor dazu konfiguriert ist, zu bewirken, dass das UE:

eine Angabe eines Bedarfs eines On-Demand-Positionierungsreferenzsignals, On-Demand-PRS, an einen Location-Server (1100) überträgt (1205);

einen vordefinierten Satz von On-Demand-PRS-Konfigurationen von dem Location-Server empfängt (1210);

bestimmt (1215), ob der vordefinierte Satz von On-Demand-PRS-Konfigurationen einen Satz von Positionierungsbedingungen des UE erfüllt;

eine erste zusätzliche On-Demand-PRS-Anforderung auf der Basis des vordefinierten Satzes von On-Demand-PRS-Konfigurationen an den Location-Server überträgt (1220); und

einen Satz von On-Demand-PRS-Konfigurationsparametern, die die eine oder die mehreren Positionierungsbedingungen erfüllen, von dem Location-Server empfängt (1225); und

eine tatsächliche maximale Anzahl von unterstützten vordefinierten Downlink-PRS-Konfigurationen, DL-PRS-Konfigurationen, von dem Location-Server empfängt.

2. UE nach Anspruch 1, wobei die Angabe ein Flag umfasst, das anfordert, einen vordefinierten Satz von On-Demand-PRS-Konfigurationen zu empfangen.

3. UE nach Anspruch 2, wobei die Angabe mit einer Anforderung eines Satzes von gewünschten On-Demand-PRS-Konfigurationsparametern oder eines Teilsatzes von On-Demand-PRS-Konfigurationsparametern, der zu einem größeren Satz gehört, einhergeht.

**4.** UE nach Anspruch 1, wobei die erste zusätzliche On-Demand-PRS-Anforderung einen Satz von einem oder mehreren Indizes umfasst, die jeweils eine entsprechende vordefinierte PRS-Konfiguration referenzieren.

**5.** UE nach Anspruch 4, wobei der Satz von einem oder mehreren Indizes gemäß einer Präferenz oder Priorität geordnet ist.

**6.** UE nach Anspruch 4, wobei der Satz von einem oder mehreren Indizes von der höchsten zu der niedrigsten On-Demand-PRS-Konfiguration geordnet ist.

**7.** UE nach Anspruch 1, wobei die Angabe ferner eine bestimmte Zeit oder eine bestimmte Location angibt, die mit dem Bedarf des On-Demand-PRS assoziiert ist.

**8.** UE nach Anspruch 1, wobei der Prozessor dazu konfiguriert ist, zu bewirken, dass das UE eine maximale Anzahl von unterstützten vordefinierten Downlink-PRS-Konfigurationen, DL-PRS-Konfigurationen, oder einen Vorrichtungstyp an den Location-Server überträgt, optional wobei die maximale Anzahl durch einen Einzelwert signalisiert wird, der einer Menge von vordefinierten On-Demand-PRS-Konfigurationen entspricht, die das UE speichern kann.

**9.** UE nach Anspruch 1, wobei der Prozessor dazu konfiguriert ist, zu bewirken, dass das UE eine maximale Anzahl von unterstützten On-Demand-PRS-Konfigurationen von dem Location-Server empfängt.

**10.** UE nach Anspruch 1, wobei der Prozessor zum Angeben des Bedarfs einer On-Demand-PRS-Konfiguration zu einer spezifischen Zeit oder an einem spezifischen Bereich dazu konfiguriert ist, zu bewirken, dass das UE eine DE-initiierte On-Demand-PRS-Fähigkeit oder einen Vorrichtungstyp unter Verwendung einer Long-term-evolution-Positioning-Protocol-Nachricht, LPP-Nachricht, *ProvideCapabilityInformation* an den Location-Server überträgt.

**11.** Verfahren (1200) zur drahtlosen Kommunikation an einem Teilnehmergerät, UE (1000), wobei das Verfahren umfasst:

Übertragen (1205) einer Angabe eines Bedarfs eines On-Demand-Positionierungsreferenzsignals, On-Demand-PRS, an einen Location-Server (1100);
Empfangen (1210) eines vordefinierten Satzes von On-Demand-PRS-Konfigurationen von dem Location-Server;
Bestimmen (1215), ob der vordefinierte Satz von On-Demand-PRS-Konfigurationen einen Satz von Positionierungsbedingungen des UE erfüllt;
Übertragen (1220) einer ersten zusätzlichen On-Demand-PRS-Anforderung auf der Basis des vordefinierten Satzes von On-Demand-PRS-Konfigurationen an den Location-Server; und
Empfangen (1225) eines Satzes von On-Demand-PRS-Konfigurationsparametern, die die eine oder die mehreren Positionierungsbedingungen erfüllen, von dem Location-Server; und
Empfangen einer tatsächlichen maximalen Anzahl von unterstützten vordefinierten Downlink-PRS-Konfigurationen, DL-PRS-Konfigurationen, von dem Location-Server.

**12.** Location-Server (1100) zur drahtlosen Kommunikation, umfassend:

einen Speicher (1110); und
einen Prozessor (1105), der an den Speicher gekoppelt ist, wobei der Prozessor dazu konfiguriert ist, zu bewirken, dass der Location-Server:

eine Angabe eines Bedarfs eines On-Demand-Positionierungsreferenzsignals, On-Demand-PRS, von einem Teilnehmergerät, UE (1000), empfängt (1305);
eine vordefinierte Liste von On-Demand-PRS-Konfigurationen an das UE überträgt (1310);
eine erste zusätzliche On-Demand-PRS-Anforderung, die einer oder mehreren Positionierungsbedingungen des UE entspricht, von dem UE empfängt (1315); und
einen Satz von On-Demand-PRS-Konfigurationsparametern, die die eine oder die mehreren Positionierungsbedingungen erfüllen, an das UE überträgt (1320); und
eine tatsächliche maximale Anzahl von unterstützten vordefinierten Downlink-PRS-Konfigurationen, DL-PRS-Konfigurationen, an das UE überträgt.

**13.** Einrichtung nach Anspruch 12, wobei die tatsächliche maximale Anzahl auf einem Location-Server-Einsatz basiert.

**EP 4 430 896 B1**

**14.** Location-Server nach Anspruch 12, wobei die Angabe eine bzw. einen oder mehrere der folgenden umfasst: Downlink-PRS-Konfigurationsparameter, DL-PRS-Konfigurationsparameter; eine DL-PRS-Periodizität, eine DL-PRS-Ressourcenbandbreite, DL-PRS-Quasi-Colocationsinformationen, DL-PRS-QCL-Informationen; einen DL-PRS-Ressourcenwiederholungsfaktor, eine Anzahl von DL-PRS-Symbolen pro DL-PRS-Ressource, eine DL-PRS-Comb-Size, DL-PRS-Frequenzschichten, einen DL-PRS-On-Indikator, einen DL-PRS-Off-Indikator oder eine Kombination davon.

**15.** Verfahren (1300) zur drahtlosen Kommunikation an einem Location-Server (1100), wobei das Verfahren umfasst:

Empfangen (1305) einer Angabe eines Bedarfs eines On-Demand-Positionierungsreferenzsignals, On-Demand-PRS, von einem Teilnehmergerät, UE (1000);
Übertragen (1310) einer vordefinierten Liste von On-Demand-PRS-Konfigurationen an das UE;
Empfangen (1315) einer ersten zusätzlichen On-Demand-PRS-Anforderung, die einer oder mehreren Positionierungsbedingungen des UE entspricht, von dem UE;
Übertragen (1320) eines Satzes von On-Demand-PRS-Konfigurationsparametern, die die eine oder die mehreren Positionierungsbedingungen erfüllen, an das UE; und
Übertragen einer tatsächlichen maximalen Anzahl von unterstützten vordefinierten Downlink-PRS-Konfigurationen, DL-PRS-Konfigurationen, an das UE.

**Revendications**

**1.** Équipement utilisateur, UE, (1000) pour communication sans fil, comprenant :

une mémoire (1010) ; et
un processeur (1005) couplé à la mémoire, le processeur étant configuré pour amener l'UE à :

transmettre (1205), à un serveur de localisation (1100), une indication d'un besoin d'un signal de référence de positionnement à la demande, PRS ;
recevoir (1210), à partir du serveur de localisation, un ensemble prédéfini de configurations de PRS à la demande ;
déterminer (1215) si l'ensemble prédéfini de configurations de PRS à la demande répond à un ensemble d'exigences de positionnement de l'UE ;
transmettre (1220), au serveur de localisation, une première demande de PRS à la demande supplémentaire basée sur l'ensemble prédéfini de configurations de PRS à la demande ; et
recevoir (1225), à partir du serveur de localisation, un ensemble de paramètres de configuration de PRS à la demande qui répondent aux une ou plusieurs exigences de positionnement ; et
recevoir, à partir du serveur de localisation, un nombre maximal réel de configurations de PRS prédéfinies prises en charge pour la liaison descendante, DL.

**2.** UE selon la revendication 1, dans lequel l'indication comprend un indicateur demandant de recevoir l'ensemble prédéfini de configurations de PRS à la demande.

**3.** UE selon la revendication 2, dans lequel l'indication est accompagnée d'une demande d'un ensemble de paramètres de configuration de PRS à la demande souhaités ou d'un sous-ensemble de paramètres de configuration de PRS à la demande appartenant à un ensemble plus large.

**4.** UE selon la revendication 1, dans lequel la première demande de PRS à la demande supplémentaire comprend un ensemble d'un ou plusieurs indices, chacun faisant référence à une configuration de PRS prédéfinie correspondante.

**5.** UE selon la revendication 4, dans lequel l'ensemble d'un ou plusieurs indices est classé selon une préférence ou une priorité.

**6.** UE selon la revendication 4, dans lequel l'ensemble d'un ou plusieurs indices est classé de la configuration de PRS à la demande la plus élevée à la plus basse.

**7.** UE selon la revendication 1, dans lequel l'indication indique en outre un certain moment ou un certain emplacement associé au besoin du PRS à la demande.

8. UE selon la revendication 1, dans lequel le processeur est configuré pour amener l'UE à transmettre, au serveur de localisation, un nombre maximal de configurations de PRS prédéfinies prises en charge pour la liaison descendante, DL, ou un type de dispositif, éventuellement dans lequel le nombre maximal est signalé par une valeur unique qui correspond à une quantité de configurations de PRS à la demande prédéfinies que l'UE est capable de stocker.

9. UE selon la revendication 1, dans lequel le processeur est configuré pour amener l'UE à recevoir, à partir du serveur de localisation, un nombre maximal de configurations de PRS à la demande prises en charge.

10. UE selon la revendication 1, dans lequel, pour indiquer le besoin d'une configuration de PRS à la demande à un moment ou dans une zone spécifique, le processeur est configuré pour amener l'UE à transmettre, au serveur de localisation, une capacité de PRS à la demande initiée par l'UE ou un type de dispositif à l'aide d'un message *ProvideCapabilityInformation* du protocole de positionnement LTE (Long-Term Evolution), LPP.

11. Procédé (1200) de communication sans fil au niveau d'un équipement utilisateur, UE, (1000), le procédé comprenant :

la transmission (1205), à un serveur de localisation (1100), d'une indication d'un besoin d'un signal de référence de positionnement à la demande, PRS ;
la réception (1210), à partir du serveur de localisation, d'un ensemble prédéfini de configurations de PRS à la demande ;
la détermination (1215) de si l'ensemble prédéfini de configurations de PRS à la demande répond à un ensemble d'exigences de positionnement de l'UE ;
la transmission (1220), au serveur de localisation, d'une première demande de PRS à la demande supplémentaire basée sur l'ensemble prédéfini de configurations de PRS à la demande ; et
la réception (1225), à partir du serveur de localisation, d'un ensemble de paramètres de configuration de PRS à la demande qui répondent aux une ou plusieurs exigences de positionnement ; et
la réception, à partir du serveur de localisation, d'un nombre maximal réel de configurations de PRS prédéfinies prises en charge pour la liaison descendante, DL.

12. Serveur de localisation (1100) pour communication sans fil, comprenant :

une mémoire (1110) ; et
un processeur (1105) couplé à la mémoire, le processeur étant configuré pour amener le serveur de localisation à :

recevoir (1305), à partir d'un équipement utilisateur, UE, (1000), une indication d'un besoin de signal de référence de positionnement à la demande, PRS ;
transmettre (1310), à l'UE, une liste prédéfinie de configurations de PRS à la demande ;
recevoir (1315), à partir de l'UE, une première demande de PRS à la demande supplémentaire correspondant à une ou plusieurs exigences de positionnement de l'UE ; et
transmettre (1320), à l'UE, un ensemble de paramètres de configuration de PRS à la demande qui répondent aux une ou plusieurs exigences de positionnement ; et
transmettre, à l'UE, un nombre maximal réel de configurations de PRS prédéfinies prises en charge pour la liaison descendante, DL.

13. Appareil selon la revendication 12, dans lequel le nombre maximal réel est basé sur un déploiement de serveur de localisation.

14. Serveur de localisation selon la revendication 12, dans lequel l'indication comprend un ou plusieurs des éléments suivants : des paramètres de configuration de PRS pour la liaison descendante, DL, une périodicité de PRS DL, une bande passante de ressources de PRS DL, des informations de quasi-colocalisation, QCL, de PRS DL, un facteur de répétition de ressources de PRS DL, un nombre de symboles de PRS DL par ressource de PRS DL, une taille de peigne de PRS DL, des couches de fréquence de PRS DL, un indicateur de PRS DL activé, un indicateur de PRS DL désactivé, ou une combinaison de ceux-ci.

15. Procédé (1300) de communication sans fil au niveau d'un serveur de localisation (1100), le procédé comprenant :

la réception (1305), à partir d'un équipement utilisateur, UE, (1000), d'une indication d'un besoin d'un signal de référence de positionnement à la demande, PRS ;

la transmission (1310), à l'UE, d'une liste prédéfinie de configurations de PRS à la demande ;

la réception (1315), à partir de l'UE, d'une première demande de PRS à la demande supplémentaire correspondant à une ou plusieurs exigences de positionnement de l'UE ;

la transmission (1320), à l'UE, d'un ensemble de paramètres de configuration de PRS à la demande qui répondent aux une ou plusieurs exigences de positionnement ; et

la transmission, à l'UE, d'un nombre maximal réel de configurations de PRS prédéfinies prises en charge pour la liaison descendante, DL.

FIG. 1

FIG. 2

FIG. 3

```
-- ASN1START
RequestLocationInformation ::=      SEQUENCE {
    criticalExtensions                  CHOICE {
        c1                                  CHOICE {
            requestLocationInformation-r9     RequestLocationInformation-r9-IEs,
            spare3 NULL, spare2 NULL, spare1 NULL
        },
        criticalExtensionsFuture          SEQUENCE {}
    }
}

RequestLocationInformation-r9-IEs ::=      SEQUENCE {
    commonIEsRequestLocationInformation       CommonIEsRequestLocationInformation     OPTIONAL,     -- Need ON
    a-gnss-RequestLocationInformation         A-GNSS-RequestLocationInformation       OPTIONAL,     -- Need ON
    otdoa-RequestLocationInformation          OTDOA-RequestLocationInformation        OPTIONAL,     -- Need ON
    ecid-RequestLocationInformation           ECID-RequestLocationInformation         OPTIONAL,     -- Need ON
    epdu-RequestLocationInformation           EPDU-Sequence                           OPTIONAL,     -- Need ON
    ...,
    [[
    sensor-RequestLocationInformation-r13     Sensor-RequestLocationInformation-r13   OPTIONAL,     -- Need ON
    tbs-RequestLocationInformation-r13        TBS-RequestLocationInformation-r13      OPTIONAL,     -- Need ON
    wlan-RequestLocationInformation-r13       WLAN-RequestLocationInformation-r13     OPTIONAL,     -- Need ON
    bt-RequestLocationInformation-r13         BT-RequestLocationInformation-r13       OPTIONAL,     -- Need ON
    ]],
    [[ nr-ECID-RequestLocationInformation-r16
                          NR-ECID-RequestLocationInformation-r16          OPTIONAL,     -- Need ON
       nr-Multi-RTT-RequestLocationInformation-r16
                          NR-Multi-RTT-RequestLocationInformation-r16     OPTIONAL,     -- Need ON
       nr-DL-AoD-RequestLocationInformation-r16
                          NR-DL-AoD-RequestLocationInformation-r16        OPTIONAL,     -- Need ON
       nr-DL-TDOA-RequestLocationInformation-r16
                          NR-DL-TDOA-RequestLocationInformation-r16       OPTIONAL,     -- Need ON
    ]]
}
-- ASN1STOP
```

FIG. 4

```
-- ASN1START

ProvideLocationInformation ::=      SEQUENCE {
    criticalExtensions                   CHOICE {
        c1                                   CHOICE {
            provideLocationInformation-r9      ProvideLocationInformation-r9-IEs,
            spare3 NULL, spare2 NULL, spare1 NULL
        },
        criticalExtensionsFuture  SEQUENCE {}
    }
}


ProvideLocationInformation-r9-IEs ::= SEQUENCE {
    commonIEsProvideLocationInformation        CommonIEsProvideLocationInformation            OPTIONAL,
    a-gnss-ProvideLocationInformation          A-GNSS-ProvideLocationInformation              OPTIONAL,
    otdoa-ProvideLocationInformation           OTDOA-ProvideLocationInformation               OPTIONAL,
    ecid-ProvideLocationInformation            ECID-ProvideLocationInformation                OPTIONAL,
    epdu-ProvideLocationInformation            EPDU-Sequence                                  OPTIONAL,
    ...,
    [[
    sensor-ProvideLocationInformation-r13      Sensor-ProvideLocationInformation-r13          OPTIONAL,
    tbs-ProvideLocationInformation-r13         TBS-ProvideLocationInformation-r13             OPTIONAL,
    wlan-ProvideLocationInformation-r13        WLAN-ProvideLocationInformation-r13            OPTIONAL,
    bt-ProvideLocationInformation-r13          BT-ProvideLocationInformation-r13              OPTIONAL
    ]],
    [[ nr-ECID-ProvideLocationInformation-r16      NR-ECID-ProvideLocationInformation-r16          OPTIONAL,
        nr-Multi-RTT-ProvideLocationInformation-r16 NR-Multi-RTT-ProvideLocationInformation-r16 OPTIONAL,
        nr-DL-AoD-ProvideLocationInformation-r16    NR-DL-AoD-ProvideLocationInformation-r16    OPTIONAL,
        nr-DL-TDOA-ProvideLocationInformation-r16   NR-DL-TDOA-ProvideLocationInformation-r16   OPTIONAL
    ]]
}

-- ASN1STOP
```

FIG. 5

FIG. 6

601

605 〜 Neighboring NG-
RAN node

UE 〜205    Serving NG-
RAN node    Neighboring NG-
RAN node 〜 603    305 〜 Location
Server

701

1. Location server blindly provides pre-defined PRS configurations without considering UE's positioning requirements with *a configured timer mechanism in which the UE may transmit a second on-demand PRS request*

2. UE explicitly indicates need for a new set of on-demand PRS via LPP *RequestAssistanceData* that satisfies the received timer mechanism

703

705 〜 3. Determines the need for PRS transmission or change to PRS transmission characteristics

4. NRPPa: PRS Configuration Request

707

5. NRPPa: PRS Configuration Response

709

711

6. Provide Updated PRS configurations *based on UE's desired requirements*

700

# FIG. 7

1. Location server explicitly indicates the maximum supported pre-defined on-demand PRS configurations by the network deployment via e.g., LPP *RequestCapabilityInformation* or LPP *ProvideAssistanceData* message

2. UE requests the maximum or less than the maximum supported pre-defined on-demand PRS configurations supported by the network via e.g., LPP *RequestAssistanceData* message

FIG. 8

1. Location server requests UE's on-demand PRS capabilities, in terms of at least the maximum supported pre-defined on-demand PRS configurations and device type via e.g., LPP *RequestCapabilityInformation*

2. UE provides the maximum supported pre-defined on-demand PRS configurations and device type based on its capabilities via e.g., LPP *ProvideCapabilityInformation* message

FIG. 9

User Equipment Apparatus
1000

Processor
1005

Memory
1010

Input Device
1015

Output Device
1020

Transceiver 1025

Transmitter
1030

Receiver
1035

Network Interface(s)
1040

Application Interface(s)
1045

FIG. 10

Network Apparatus
1100

| Processor 1105 | Memory 1110 |

| Input Device 1115 | Output Device 1120 |

Transceiver 1125

| Transmitter 1130 | Receiver 1135 |

Network Interface(s) 1140

Application Interface(s) 1145

## FIG. 11

1200

Start

1205 — Transmit, to a location server, an indication of a need for an on-demand PRS

1210 — Receive, from the location server, a pre-defined set of on-demand PRS configurations

1215 — Determine whether the pre-defined set of on-demand PRS configurations meets a set of positioning requirements of the apparatus

1220 — Transmit, to the location server, a first additional on-demand PRS request based on the pre-defined set of on-demand PRS configurations failing to meet one or more positioning requirements of the apparatus

1225 — Receive, from the location server, a set of on-demand PRS confirmation parameters that meet the one or more positioning requirements

End

FIG. 12

1300

Start

1305 — Receive, from a UE, an indication of a need for on-demand PRS

1310 — Transmit, to the UE, a pre-defined list of on-demand PRS configurations

1315 — Receive, from the UE, a first additional on-demand PRS request corresponding to one or more positioning requirements of the UE

1320 — Transmit, to the UE, a on-demand PRS confirmation parameters that meet the one or more positioning requirements

End

FIG. 13

# EP 4 430 896 B1

**Patent documents cited in the description**

- US 63307984